(19) **Europäisches Patentamt / European Patent Office / Office européen des brevets**

(11) **EP 4 678 350 A1**

(12) **EUROPEAN PATENT APPLICATION**
published in accordance with Art. 153(4) EPC

(43) Date of publication:
14.01.2026 Bulletin 2026/03

(51) International Patent Classification (IPC):
**B25J 9/16** (2006.01)

(21) Application number: 24847852.1

(22) Date of filing: 21.06.2024

(86) International application number:
PCT/CN2024/100652

(87) International publication number:
WO 2025/025890 (06.02.2025 Gazette 2025/06)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 31.07.2023 CN 202310960451

(71) Applicant: Tencent Technology (Shenzhen) Company Limited
Shenzhen, Guangdong, 518057 (CN)

(72) Inventors:
• LI, Tingguang
Shenzhen, Guangdong 518057 (CN)

• ZHANG, Yizheng
Shenzhen, Guangdong 518057 (CN)
• HAN, Lei
Shenzhen, Guangdong 518057 (CN)
• SHENG, Jiapeng
Shenzhen, Guangdong 518057 (CN)
• ZHANG, Chong
Shenzhen, Guangdong 518057 (CN)

(74) Representative: Gunzelmann, Rainer
Wuesthoff & Wuesthoff
Patentanwälte und Rechtsanwalt PartG mbB
Schweigerstraße 2
81541 München (DE)

(54) **ROBOT CONTROL METHOD AND APPARATUS, AND ELECTRONIC DEVICE, COMPUTER-READABLE STORAGE MEDIUM AND COMPUTER PROGRAM PRODUCT**

(57)     Provided are a robot control method and apparatus, an electronic device, a storage medium, and a program product. The method includes: acquiring state data configured for indicating a current motion state of a robot, and acquiring environmental data configured for indicating an environment where the robot is currently located; predicting, based on the state data, an initial action parameter configured for controlling the robot to imitate an object action of a target object; predicting, based on the environmental data, an environmental impact parameter configured for representing impact generated by the environment on imitation of the object action by the robot; fusing the initial action parameter and the environmental impact parameter to obtain a fused action parameter of the robot; and generating a control instruction based on the fused action parameter, the control instruction being configured for controlling the robot to perform a target action indicated by the fused action parameter.

Acquire state data configured to indicate a current motion state of a robot, and acquire current environmental data configured to indicate an environment in which the robot is located — 101

Predict, based on the state data, an initial action parameter configured to control the robot to imitate an object action of a target object — 102

Predict, based on the environmental data, an environmental impact parameter configured to represent environment impact on imitation of the object action by the robot — 103

Fuse the initial action parameter and the environmental impact parameter to obtain a fused action parameter of the robot — 104

Generate a control instruction based on the fused action parameter — 105

FIG. 3

**Description**

RELATED APPLICATION

This application is based upon and claims priority to Chinese Patent Application No. 202310960451.9, filed on July 31, 2023.

FIELD OF THE TECHNOLOGY

This application relates to the technical field of computers, and in particular, to a robot control method and apparatus, an electronic device, a computer-readable storage medium, and a computer program product.

BACKGROUND OF THE DISCLOSURE

Artificial intelligence (AI) involves a theory, a method, a technology, and an application system that use a digital computer or a machine controlled by the digital computer to simulate, extend, and expand human intelligence, perceive an environment, acquire knowledge, and use knowledge to obtain an optimal result. The AI technology is a comprehensive discipline and relates to a wide range of fields including hardware-level technologies and software-level technologies. Basic AI technologies generally include technologies such as a sensor, a dedicated AI chip, cloud computing, distributed storage, a big data processing technology, an operating/interaction system, and electromechanical integration.

In the related art, the control of the robot is usually achieved by writing fixed program instructions. As a result, the action of the controlled robot cannot be accurately adapted to the environment where the robot is located, resulting in low motion performance of the robot.

SUMMARY

Embodiments of this application provide a robot control method and apparatus, an electronic device, a computer-readable storage medium, and a computer program product, which can effectively improve the motion performance of the robot.

Technical solutions of the embodiments of this application are implemented as follows.

The embodiments of this application provide a robot control method, including:

acquiring state data configured to indicate a current motion state of a robot, and acquiring environmental data configured to indicate an environment where the robot is currently located;

predicting, based on the state data, an initial action parameter configured to control the robot to imitate an object action of a target object;

predicting, based on the environmental data, an environmental impact parameter configured to represent environment impact on imitation of the object action by the robot;

fusing the initial action parameter and the environmental impact parameter to obtain a fused action parameter for the robot; and

generating a control instruction based on the fused action parameter, the control instruction being configured to control the robot to perform a target action indicated by the fused action parameter.

The embodiments of this application provide a robot control apparatus, including:

a feature acquisition module configured to acquire state data configured to indicate a current motion state of a robot, and acquire environmental data configured to indicate an environment where the robot is currently located;

an initial action prediction module configured to predict, based on the state data, an initial action parameter configured to control the robot to imitate an object action of a target object;

an offset action prediction module configured to predict, based on the environmental data, an environmental impact parameter configured to represent environment impact on imitation of the object action by the robot;

a fusion module configured to fuse the initial action parameter and the environmental impact parameter to obtain a fused action parameter for the robot; and

a generation module configured to generate a control instruction based on the fused action parameter, the control instruction being configured to control the robot to perform a target action indicated by the fused action parameter.

The embodiments of this application provide an electronic device, including:

a memory configured to store a computer-executable instruction or a computer program; and

a processor configured to implement, when executing the computer-executable instruction or the computer program stored in the memory, the robot control method provided in all embodiments of this application.

The embodiments of this application provide a computer-readable storage medium, having a computer-executable instruction stored therein, the computer-executable instruction being configured to implement, when executed by a processor, the robot control method provided in all embodiments of this application.

The embodiments of this application provide a computer program product. The computer program product includes a computer program or a computer-executable instruction. The computer program or the computer-executable instruction is stored in a computer-readable storage medium. A processor of an electronic device reads the computer-executable instruction from the computer-readable storage medium and executes the computer-executable instruction to cause the electronic device to perform the robot control method provided in all embodiments of this application.

The embodiments of this application have the following beneficial effects.

The initial action parameter configured to control the robot to imitate the object action of the target object is predicted, the environmental impact parameter configured to represent environment impact on imitation of the object action by the robot is predicted, and the initial action parameter and the environmental impact parameter are fused to obtain the fused action parameter for the robot. Since the obtained environmental impact parameter can be highly adapted to the environment where the robot is located, the robot can highly adapt to the environment to perform an action, and the obtained initial action parameter can highly imitate the action of the target object so that the robot can highly simulate the target object. Thus, the obtained fused action parameter can be highly adapted to the environment where the robot is located, and can highly simulate the target object. The control instruction generated based on the fused action parameter controls the robot to move according to the target action indicated by the fused action parameter so that the action performed by the robot can be highly adapted to the environment where the robot is located, and can highly simulate the target object, thereby effectively improving the motion performance of the robot.

BRIEF DESCRIPTION OF THE DRAWINGS

FIG. 1 is a schematic architectural diagram of a robot control system according to an embodiment of this application.

FIG. 2 is a schematic structural diagram of an electronic device for robot control according to an embodiment of this application.

FIG. 3 is a first schematic flowchart of a robot control method according to an embodiment of this application.

FIG. 4 is a second schematic flowchart of a robot control method according to an embodiment of this application.

FIG. 5 is a schematic diagram of a network structure of an initial feature prediction network according to an embodiment of this application.

FIG. 6 is a third schematic flowchart of a robot control method according to an embodiment of this application.

FIG. 7 is a fourth schematic flowchart of a robot control method according to an embodiment of this application.

FIG. 8 is a fifth schematic flowchart of a robot control method according to an embodiment of this application.

FIG. 9 is a schematic diagram of a network structure of an environmental impact parameter prediction network according to an embodiment of this application.

FIG. 10 is a sixth schematic flowchart of a robot control method according to an embodiment of this application.

FIG. 11 is a seventh schematic flowchart of a robot control method according to an embodiment of this application.

FIG. 12 is an eighth schematic flowchart of a robot control method according to an embodiment of this application.

FIG. 13 is a ninth schematic flowchart of a robot control method according to an embodiment of this application.

FIG. 14 is a tenth schematic flowchart of a robot control method according to an embodiment of this application.

FIG. 15 is an eleventh schematic flowchart of a robot control method according to an embodiment of this application.

FIG. 16 is a twelfth schematic flowchart of a robot control method according to an embodiment of this application.

FIG. 17 is a first schematic diagram of a principle of a robot control method according to an embodiment of this application.

FIG. 18 is a second schematic diagram of a principle of a robot control method according to an embodiment of this application.

DESCRIPTION OF EMBODIMENTS

To make the objectives, technical solutions, and advantages of this application clearer, this application will be described in further detail below with reference to the accompanying drawings. The described embodiments are not to be considered as a limitation to this application. All other embodiments obtained by a person skilled in the art without creative efforts shall fall within the protection scope of this application.
The term, involved in the following description, "some embodiments" describes subsets of all possible embodiments, but "some embodiments" may be the same subset or different subsets of all the possible embodiments and may be combined with each other without conflict.
The term, involved in the following description, "first/second/ third" is merely intended to distinguish similar objects rather than describing specific orders. The "first/second/ third" is interchangeable in proper circumstances to enable the embodiments of this application to be implemented in other orders than those illustrated or described herein.
Unless defined otherwise, all technical and scientific terminologies used herein have the same meaning as commonly understood by a person skilled in the art to which this application belongs. Terms used herein are merely intended to describe the embodiments of this application, but are not intended to limit this application.
Before the embodiments of this application are further described in detail, nouns and terms involved in all embodiments of this application are described. The nouns and terms involved in all embodiments of this application may be applicable to the following explanations.

1) In response to: this term is configured to indicate a condition or a state on which performed operations depend. When the condition or the state on which the performed operations depend is satisfied, one or more operations may be performed in real time or with a set delay. Without being specifically stated, there is no limitation to the order in which a plurality of operations are performed.

2) AI: it involves a theory, a method, a technology, and an application system that use a digital computer or a machine controlled by the digital computer to simulate, extend, and expand human intelligence, perceive an environment, acquire knowledge, and use knowledge to obtain an optimal result. The AI technology is a comprehensive discipline and relates to a wide range of fields including hardware-level technologies and software-level technologies. Basic AI technologies generally include technologies such as a sensor, a dedicated AI chip, cloud computing, distributed storage, a big data processing technology, an operating/interaction system, and electromechanical integration.

3) Convolutional neural network (CNN): it is a type of feed forward neural networks (FNNs) that contain convolution calculation and have a deep structure. It is one of the representative algorithms of deep learning. The CNN has a representation learning capability and can perform shift-invariant classification on input images based on a hierarchical structure thereof.

4) Machine learning (ML): it is a multi-field interdiscipline and relates to a plurality of disciplines such as the probability theory, statistics, approximation theory, convex analysis, and algorithm complexity theory. The ML specializes in studying how a computer simulates or implements a human learning behavior to obtain new knowledge or skills, and reorganize an existing knowledge structure, so as to keep improving its performance. The ML is the core of AI, is a basic way to make the computer intelligent, and is applied to various fields of AI. The ML and the deep learning generally include technologies such as an artificial neural network, a confidence network, reinforcement learning (RL), transfer learning, inductive learning, and learning from demonstrations.

5) Convolutional layer: each convolutional layer in the CNN includes several convolution units, and parameters of each convolution unit are optimized through the back propagation algorithm. An objective of the convolution operation is to extract different input features. A first convolutional layer may only extract some low-level features such as edges, lines, and corners, and deeper layers of the network can iteratively extract more complex features from the low-level features.

6) RL: it is alternatively referred to as evaluation learning or enhancement learning, is one of the paradigms and methodologies of ML, and is configured for describing and solving the problem that the agent learns policies to maximize rewards or achieve specific goals during interaction with the environment. A common model of RL is a standard Markov decision process (MDP). According to a given condition, RL may be classified into model-based RL, model-free RL, active RL, and passive RL. Variants of RL include inverse RL, hierarchical RL, and RL for partially observable systems. Algorithms adopted to solve RL problems may be classified into two categories: policy search algorithms and value function algorithms. A deep learning model may be used in RL to form deep RL. Inspired by behavioral psychology, the RL theory focuses on online learning and attempts to maintain a balance between exploration and exploitation. Unlike supervised learning and unsupervised learning, RL does not require any data to be given in advance, but obtains learning information and updates model parameters by receiving rewards (feedback) from the environment for actions. RL problems have been discussed in fields such as information theory, game theory, and automatic control, and are adopted to explain equilibrium states under bounded rationality, design recommendation systems, and robot interaction systems. Some complex RL algorithms possess general intelligence to solve complex problems to some extent.

7) Robot: it is a machine that can perform tasks, such as jobs or movements, through programming and automatic control. The robot has basic features such as perception, decision-making, and execution, and may help or even replace humans to complete dangerous, heavy, and complex work, thereby improving the work efficiency and quality, serving human life, and expanding or extending a range of activities and capabilities of humans.

8) Control theory: it is a discipline that studies theories, methods, and technologies, and engineering application of control. The control science studies common problems in various application fields based on a control theory, a system theory, and an information theory, such as establishing a system model, analyzing internal and environmental information, and adopting a control and decision-making behavior to realize a control objective. Moreover, close combination with various application fields forms diverse content of control engineering.

9) Legged robot: it refers to a robot with wheeled locomotion and legged locomotion capabilities. The wheeled locomotion refers to the movement of the robot being driven by wheels through the contact of wheels with the ground. The legged locomotion refers to the robot having leg structures, for example, including two, four, or another number of leg structures, and realizing walking movements by alternately lifting legs.

In an implementation process of the embodiments of this application, the applicant finds that the related art has the following problems.

In the related art, the control of the robot is usually achieved by writing fixed program instructions. As a result, the action of the controlled robot cannot be accurately adapted to the environment where the robot is located, resulting in low motion performance of the robot.

The embodiments of this application provide a robot control method and apparatus, an electronic device, a computer-readable storage medium, and a computer program product, which can effectively improve the motion performance of the robot. Exemplary application of a robot control system provided in all embodiments of this application may be described below.

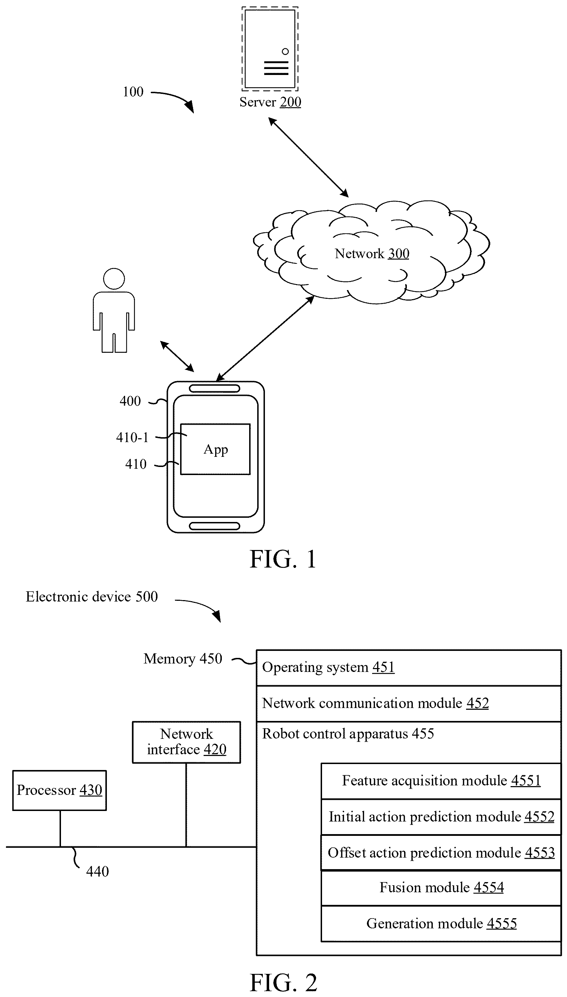

FIG. 1 is a schematic architectural diagram of a robot control system 100 according to an embodiment of this application. A terminal (a terminal 400 is exemplarily shown) is connected to a server 200 through a network 300. The network 300 may be a wide area network, a local area network, or a combination of the two.

The terminal 400 is configured for a user to use a client 410 to display a control interface on a graphical interface 410-1 (the graphical interface 410-1 is exemplarily shown). The terminal 400 and the server 200 are connected to each other through a wired or wireless network.

In some embodiments, the server 200 may be an independent physical server, may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), and a big data and AI platform. The terminal 400 may be a smartphone, a tablet computer, a notebook computer, a desktop computer, a smart speaker, a smart television, a smart watch, an in-vehicle terminal, or the like, but is not limited thereto. The electronic device provided in all embodiments of this application may be implemented as a terminal or a server. The terminal may be directly or indirectly connected to the server in a wired or wireless communication manner. This is not limited in all embodiments of this application.

In some embodiments, the server 200 acquires state data and environmental data, determines an initial action parameter and an environmental impact parameter based on the environmental data and the state data, fuses the initial action parameter and the environmental impact parameter to obtain a fused action parameter, and transmits the fused action parameter to the terminal 400. The terminal 400 generates a control instruction based on the fused action parameter.

In other embodiments, the terminal 400 acquires state data and environmental data, determines an initial action parameter and an environmental impact parameter based on the environmental data and the state data, fuses the initial action parameter and the environmental impact parameter to obtain a fused action parameter, and generates a control instruction based on the fused action parameter.

In other embodiments, the server 200 acquires state data and environmental data, determines an initial action parameter and an environmental impact parameter based on the environmental data and the state data, fuses the initial action parameter and the environmental impact parameter to obtain a fused action parameter, generates a control instruction based on the fused action parameter, and transmits the control instruction to the terminal 400.

In other embodiments, the embodiments of this application may alternatively be implemented through a cloud technology. The cloud technology refers to a hosting technology that unifies a series of resources such as hardware, software, and networks within a wide area network or a local area network to implement data calculation, storage, processing, and sharing.

The cloud technology is a generic term of a network technology, an information technology, an integration technology, a management platform technology, and an application technology based on application of a cloud computing business model. It may form a resource pool and may be used on demand, which is flexible and convenient. The cloud computing technology will become an important support. Backend services of a technology network system require a lot of computing and storage resources.

FIG. 2 is a schematic structural diagram of an electronic device 500 for robot control according to an embodiment of this application. The electronic device 500 shown in FIG. 2 may be the server 200 or the terminal 400 in FIG. 1. The electronic device 500 shown in FIG. 2 includes: at least one processor 430, a memory 450, and at least one network interface 420. Components in the electronic device 500 are coupled together through a bus system 440. The bus system 440 is configured to implement connection and communication among the components. In addition to a data bus, the bus system 440 further includes a power bus, a control bus, and a state signal bus. However, for clear description, all types of buses in FIG. 2 are marked as the bus system 440.

The processor 430 may be an integrated circuit chip having a signal processing capability, for example, a general purpose processor, a digital signal processor (DSP), or another programmable logic device, discrete gate, transistor logical device, or discrete hardware component. The general purpose processor may be a microprocessor, any conventional processor, or the like.

The memory 450 may be removable, non-removable, or a combination thereof. Exemplary hardware devices include a solid-state memory, a hard disk drive, a compact disc (CD) drive, and the like. The memory 450 alternatively includes one or more storage devices physically located away from the processor 430.

The memory 450 includes a volatile memory or a non-volatile memory, or may include both the volatile memory and the non-volatile memory. The non-volatile memory may be a read only memory (ROM). The volatile memory may be a random access memory (RAM). The memory 450 described in this embodiment of this application is intended to include any suitable type of memory.

In some embodiments, the memory 450 can store data to support various operations. Examples of the data include a program, a module, and a data structure, or their subsets or supersets, which are exemplified below.

An operating system 451 includes a system program configured for processing various basic system services and performing hardware-related tasks, such as a framework layer, a core library layer, or a driver layer, to implement various basic businesses and process the hardware-based tasks.

A network communication module 452 is configured to reach other electronic devices via one or more (wired or wireless) network interfaces 420. Illustratively, the network interface 420 includes: Bluetooth, wireless fidelity (WiFi), a universal serial bus (USB), and the like.

In some embodiments, the robot control apparatus provided in all embodiments of this application may be implemented in a software manner. FIG. 2 shows a robot control apparatus 455 stored in the memory 450. The robot control apparatus 455 may be software in the form of a program, a plug-in, or the like, and includes the following software modules: a feature acquisition module 4551, an initial action prediction module 4552, an offset action prediction module 4553, a fusion module 4554, and a generation module 4555. These modules are logical, and therefore may be arbitrarily combined or further split according to implemented functions. The functions of the modules will be described below.

In other embodiments, the robot control apparatus provided in all embodiments of this application may be implemented in a hardware manner. As an example, the robot control apparatus provided in all embodiments of this application may be a processor in the form of a hardware decoding processor and programmed to perform the robot control method provided in all embodiments of this application. For example, the processor in the form of the hardware decoding processor may adopt one or more application specific integrated circuits (ASICs), a DSP, a programmable logic device (PLD), a complex programmable logic device (CPLD), a field-programmable gate array (FPGA), or other electronic elements.

In some embodiments, the terminal or the server may implement the robot control method provided in all embodiments of this application by running a computer program or a computer-executable instruction. For example, the computer program may be a native program (for example, a dedicated robot control program) in an operating system or a software module, for example, a robot control module that may be embedded in any program (for example, an instant messaging client, an album program, an electronic map client, or a navigation client). For example, the computer program may be a native application (APP), i.e., a program that needs to be installed in the operating system to run. In summary, the foregoing computer program may be an APP, a module, or a plug-in in any form.

The robot control method provided in all embodiments of this application is described in combination with the exemplary application and implementations of the server or the terminal provided in all embodiments of this application.

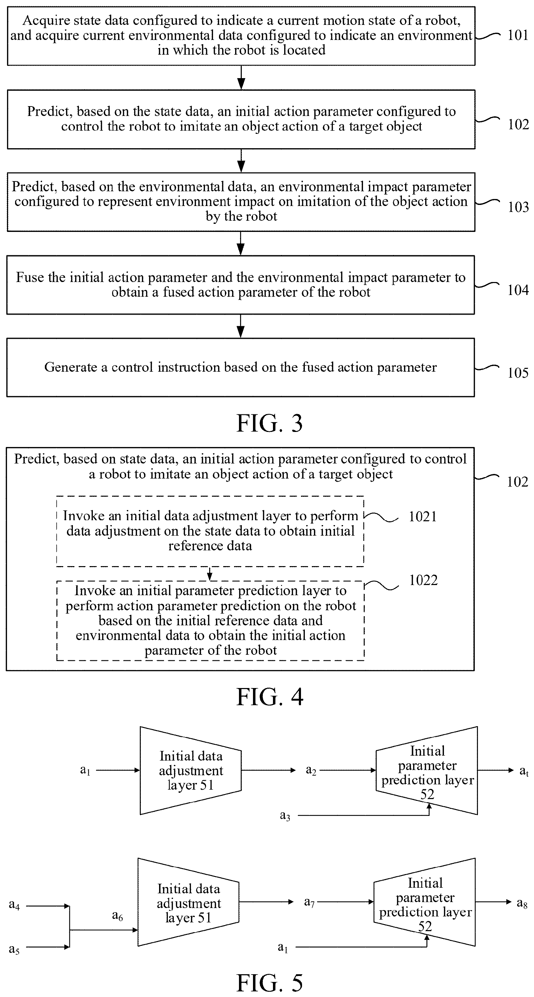

FIG. 3 is a first schematic flowchart of a robot control method according to an embodiment of this application. Descriptions are provided with reference to operation 101 to operation 105 shown in FIG. 3. The robot control method provided in this embodiment of this application may be independently implemented by a server or a terminal, or may be cooperatively implemented by a server and a terminal. Description is provided below using an example in which the method is independently implemented by the server.

Operation 101: Acquire state data configured to indicate a current motion state of a robot, and acquire environmental data configured to indicate an environment where the robot is currently located.

In some embodiments, the acquiring state data configured to indicate a current motion state of a robot may be implemented in the following manner: acquiring state information acquired by a state sensor provided on the robot, the state information being configured to indicate the current motion state of the robot; and performing feature extraction on the state information to obtain the state data.

In some embodiments, the state information refers to data or information related to the current motion state or operation state of the robot and may include a position, a velocity, a direction, a posture, and any other related parameters or indicators of the robot. The state information is provided by the state sensor and is configured to indicate a task, an action, or a behavior that the robot is currently performing. Analyzing and understanding the state information may help a robot system adjust and control motion of the robot system in real time to adapt to different environments, tasks, or requirements.

In some embodiments, the state information may be a current motion parameter of the robot. The motion parameter includes a position of an end effector of the robot, a position and a rotation angle of a root joint, a linear velocity and an angular velocity of the root joint, and the like. The state data is in a vector form corresponding to the state information.

In some embodiments, the foregoing feature extraction refers to a processing process of converting the state information in a parameter form into the state data in the vector form.

In some embodiments, the state sensor refers to a sensor configured to acquire the state information of the robot, for example, an angular velocity sensor, a linear velocity sensor, or an angle sensor.

In some embodiments, the acquiring environmental data configured to indicate an environment where the robot is currently located may be implemented in the following manner: acquiring environmental information acquired by an environmental sensor provided on the robot, the environmental information being configured to indicate the environment where the robot is currently located; and performing feature extraction on the environmental information to obtain the environmental data.

In some embodiments, the environmental information may be information of the environment where the robot is currently located, for example, whether there is an obstacle in front of the robot, an altitude of the robot, or a road condition in front of the robot.

In some embodiments, the foregoing feature extraction refers to a processing process of converting the state information in a parameter form into the environmental data in the vector form.

In some embodiments, the environmental sensor refers to a sensor configured to acquire the environmental information of the robot, for example, a distance sensor or an obstacle detection sensor.

Operation 102: Predict, based on the state data, an initial action parameter configured to control the robot to imitate an object action of a target object.

In some embodiments, the initial action parameter is configured for the robot to imitate the action of the target object.

In some embodiments, the initial action parameter is obtained through prediction by an initial feature prediction network, and the initial feature prediction network includes an initial data adjustment layer and an initial parameter prediction layer.

In some embodiments, the initial feature prediction network has the performance of imitating the action of the target object. The initial feature prediction network may be trained through action data of the target object so that the trained initial feature prediction network has the performance of imitating the action of the target object.

As an example, when the robot is a quadruped robot, a target object imitated by the quadruped robot may be a quadruped animal such as a "dog", a "monkey", or a "rabbit". Initial action parameter prediction is performed on the quadruped robot through environmental data and state data of the quadruped robot, and an obtained initial action parameter for the robot is highly similar to a motion posture of the quadruped animal such as a "dog", a "monkey", or a "rabbit", so that the quadruped robot may imitate actions of the quadruped animal such as a "dog", a "monkey", or a "rabbit".

As an example, when the robot is an octopod robot, a target object imitated by the octopod robot may be an octopod animal such as a "crab" or a "spider". Initial action parameter prediction is performed on the octopod robot through environmental data and state data of the octopod robot, and an obtained initial action parameter for the robot is highly similar to a motion posture of the octopod animal such as a "crab" or a "spider", so that the octopod robot may imitate actions of the octopod animal such as a "crab" or a "spider".

In some embodiments, FIG. 4 is a second schematic flowchart of a robot control method according to an embodiment of this application. Operation 102 shown in FIG. 3 may be implemented through operation 1021 to operation 1022 shown in FIG. 4.

Operation 1021: Invoke the initial data adjustment layer to perform data adjustment on state data to obtain initial reference data.

In some embodiments, the foregoing data adjustment refers to a processing process of performing feature transformation on the state data to obtain the initial reference data.

As an example, FIG. 5 is a schematic diagram of a network structure of an initial feature prediction network according to an embodiment of this application. An initial data adjustment layer 51 is invoked to perform data adjustment on state data $a_1$ to obtain initial reference data $a_2$.

Operation 1022: Invoke the initial parameter prediction layer to perform action parameter prediction on the robot based on the initial reference data and the environmental data to obtain the initial action parameter for the robot.

In some embodiments, the foregoing action parameter prediction refers to a processing process of predicting the initial action parameter for the robot.

As an example, referring to FIG. 5, an initial parameter prediction layer 52 is invoked to perform motion parameter prediction on the robot based on the initial reference data $a_2$ and environmental data $a_3$ to obtain an initial action parameter $a_t$ of the robot.

In this way, initial action parameter prediction is performed on the robot based on the state data and the environmental data to obtain the initial action parameter for the robot so that the obtained initial action parameter can highly imitate the action of the target object, and the robot can highly simulate the target object.

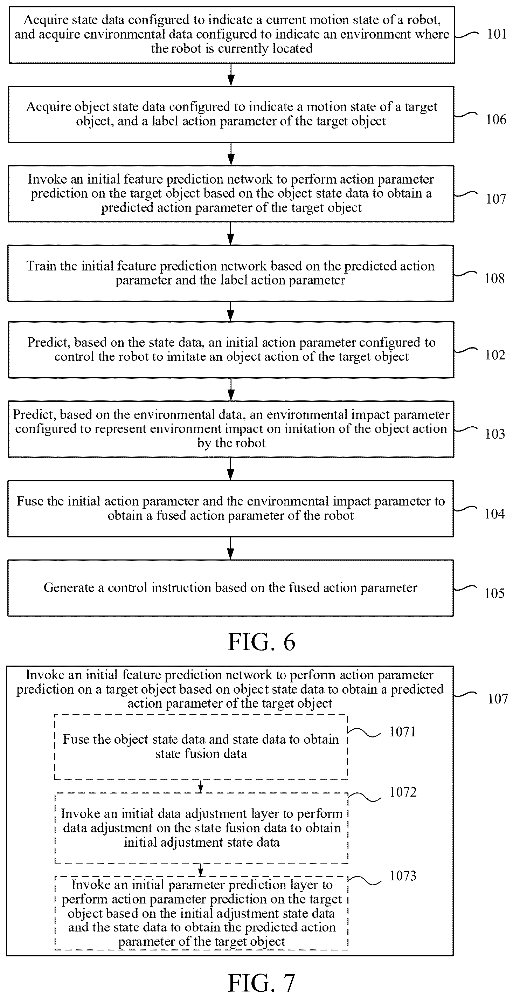

In some embodiments, FIG. 6 is a third schematic flowchart of a robot control method according to an embodiment of this application. Before operation 102 shown in FIG. 3, operation 106 to operation 108 may further be performed as follows to train the initial feature prediction network.

Operation 106: Acquire object state data configured to indicate a motion state of the target object, and a label action parameter of the target object.

In some embodiments, the acquiring object state data configured to indicate a motion state of the target object may be implemented in the following manner: acquiring object state information that is acquired by the state sensor provided on the target object and is configured to indicate the motion state of the target object, and performing feature extraction on the object state information to obtain the object state data.

As an example, when the target object is "dog", object state information that is acquired by a state sensor provided on "dog" and is configured to indicate a motion state of "dog" is acquired, and feature extraction is performed on the object state information to obtain object state data of "dog".

Operation 107: Invoke the initial feature prediction network to perform action parameter prediction on the target object based on the object state data to obtain a predicted action parameter of the target object.

In some embodiments, FIG. 7 is a fourth schematic flowchart of a robot control method according to an embodiment of this application. Operation 107 shown in FIG. 6 may be implemented through operation 1071 to operation 1073 shown in FIG. 7.

Operation 1071: Fuse the object state data and the state data to obtain state fusion data.

As an example, referring to FIG. 5, object state data $a_4$ and state data as are fused to obtain state fusion data $a_6$.

Operation 1072: Invoke the initial data adjustment layer to perform data adjustment on the state fusion data to obtain initial adjustment state data.

As an example, referring to FIG. 5, the initial data adjustment layer 51 is invoked to perform data adjustment on the state fusion data $a_6$ to obtain initial adjustment state data $a_7$.

Operation 1073: Invoke the initial parameter prediction layer to perform action parameter prediction on the target object based on the initial adjustment state data and the state data to obtain the predicted action parameter of the target object.

As an example, referring to FIG. 5, the initial parameter prediction layer 52 is invoked to perform action parameter prediction on the target object based on the initial adjustment state data $a_7$ and the state data $a_1$ to obtain predicted action parameter $a_8$ of the target object.

In this way, different types of information may be integrated by fusing the object state data and the state data, thereby enhancing the feature richness and the expression capability. This helps improve the performance and accuracy of subsequent operations. The initial feature is adjusted to be more suitable for a target task or scene. This helps resolve a mismatch or deviation between features, thereby improving the accuracy of subsequent action parameter prediction. The action of the target object is predicted based on the adjusted feature. This may help understand a behavior pattern of the target object, thereby providing useful information for subsequent decision-making and control. Feature fusion, adjustment, and prediction realize accurate understanding and prediction of the action of the target object, thereby providing support for subsequent application.

Operation 108: Train the initial feature prediction network based on the predicted action parameter and the label action parameter.

In some embodiments, operation 108 may be implemented in the following manner: training, through RL, the initial feature prediction network based on the predicted action parameter and the label action parameter.

In some embodiments, the predicted action parameter includes a plurality of sub-predicted action parameters, the label action parameter includes a plurality of sub-label action parameters, and the sub-predicted action parameter and the sub-label action parameter are in a one-to-one correspondence. The sub-predicted action parameter and a corresponding sub-label action parameter belong to the same feature dimension, and the sub-predicted action parameter and the feature dimension are in a one-to-one correspondence.

As an example, the feature dimensions include a joint position dimension, a joint velocity dimension, a root joint posture dimension, a root joint velocity dimension, and the like, and then the predicted action parameter includes a sub-predicted action parameter corresponding to the joint position dimension, a sub-predicted action parameter corresponding to the joint velocity dimension, a sub-predicted action parameter corresponding to the root joint posture dimension, and a sub-predicted action parameter corresponding to the root joint velocity dimension. The label action parameter includes a sub-label action parameter corresponding to the joint position dimension, a sub-label action parameter corresponding to the joint velocity dimension, a sub-label action parameter corresponding to the root joint posture dimension, and a sub-label action parameter corresponding to the root joint velocity dimension.

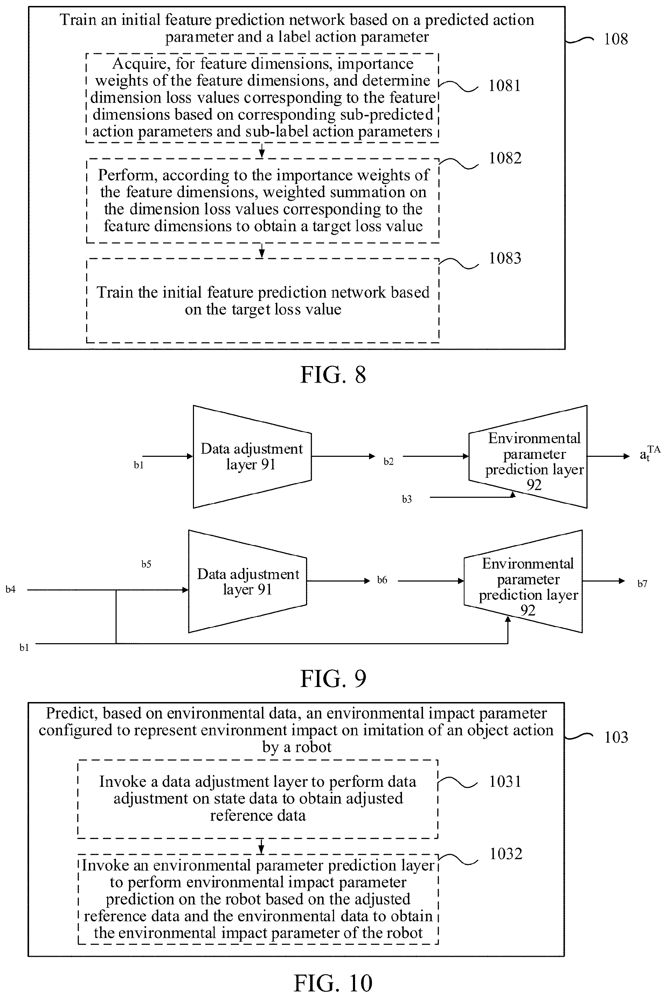

In some embodiments, FIG. 8 is a fifth schematic flowchart of a robot control method according to an embodiment of this application. Operation 108 shown in FIG. 6 may be implemented through operation 1081 to operation 1083 shown in FIG. 8 to train the initial feature prediction network.

Operation 1081: Acquire, for feature dimensions, importance weights of the feature dimensions, and determine dimension loss values corresponding to the feature dimensions based on corresponding sub-predicted action parameters and sub-label action parameters.

As an example, for the joint position dimension, an importance weight of the joint position dimension may be 0.6, and an expression of a dimension loss value corresponding to the joint position dimension may be:

$$r_t^{jpos} = \exp\left(-\sum_j \left\|\hat{q}_t^j - q_t^j\right\|^2\right) \qquad (1),$$

where $r_t^{jpos}$ is configured to indicate the dimension loss value corresponding to the joint position dimension, $\hat{q}_t^j$ is configured to indicate the sub-predicted action parameter of the joint position dimension, and $q_t^j$ is configured to indicate the sub-label action parameter of the joint position dimension.

As an example, for the joint velocity dimension, an importance weight of the joint velocity dimension may be 0.05, and an expression of a dimension loss value corresponding to the joint velocity dimension may be:

$$r_t^{jvel} = \exp(-0.1 \sum_j \left\| \hat{\dot{q}}_t^j - \dot{q}_t^j \right\|^2) \qquad (2),$$

where $r_t^{jvel}$ is configured to indicate the dimension loss value corresponding to the joint velocity dimension, $\hat{\dot{q}}_t^j$ is configured to indicate the sub-predicted action parameter of the joint velocity dimension, and $\dot{q}_t^j$ is configured to indicate the sub-label action parameter of the joint velocity dimension.

As an example, for an end effector position dimension, an importance weight of the end effector position dimension may be 0.1, and an expression of a dimension loss value corresponding to the end effector position dimension may be:

$$r_t^{epos} = \exp(-40 \sum_e \left\| \hat{p}_t^e - p_t^e \right\|^2) \qquad (3),$$

where $r_t^{epos}$ is configured to indicate the dimension loss value corresponding to the end effector position dimension, $\hat{p}_t^e$ is configured to indicate a sub-predicted action parameter of the end effector position dimension, and $p_t^e$ is configured to indicate a sub-label action parameter of the end effector position dimension.

As an example, for the root joint posture dimension, an importance weight of the root joint posture dimension may be 0.15, and an expression of a dimension loss value corresponding to the root joint posture dimension may be:

$$r_t^{bpose} = \exp(-20 \left\| \hat{p}_t^{base} - p_t^{base} \right\|^2 - 10 \left\| \hat{q}_t^{base} - q_t^{base} \right\|) \qquad (4),$$

where $r_t^{bpose}$ is configured to indicate the dimension loss value corresponding to the root joint posture dimension, $\hat{p}_t^{base}$ is configured to indicate a sub-predicted action parameter of the position of the root joint posture dimension, $p_t^{base}$ is configured to indicate a sub-label action parameter of the position of the root joint posture dimension, $\hat{q}_t^{base}$ is configured to indicate a sub-predicted action parameter of rotation of the root joint posture dimension, and $q_t^{base}$ is configured to indicate a sub-label action parameter of rotation of the root joint posture dimension.

As an example, for the root joint velocity dimension, an importance weight of the root joint velocity dimension may be 0.1, and an expression of a dimension loss value corresponding to the root joint velocity dimension may be:

$$r_t^{bvel} = \exp(-2 \left\| \hat{p}_t^{base} - \dot{p}_t^{base} \right\|^2 - 0.2 \left\| \hat{\dot{q}}_t^{base} - \dot{q}_t^{base} \right\|^2) \qquad (5),$$

where $r_t^{bvel}$ is configured to indicate the dimension loss value of the root joint velocity dimension, $\hat{\dot{p}}_t^{base}$ is configured to indicate a sub-predicted action parameter of the linear velocity of the root joint velocity dimension, $\dot{p}_t^{base}$ is configured to indicate a sub-label action parameter of the linear velocity of the root joint velocity dimension, $\hat{\dot{q}}_t^{base}$ is configured to indicate a sub-predicted action parameter of the angular velocity of the root joint velocity dimension, and $\dot{q}_t^{base}$ is configured to indicate a sub-label action parameter of the angular velocity of the root joint velocity dimension.

Operation 1082: Perform, according to the importance weights of the feature dimensions, weighted summation on the dimension loss values corresponding to the feature dimensions to obtain a target loss value.

As an example, an expression of the target loss value may be:

$$r_t = 0.6 \cdot r_t^{jpos} + 0.05 \cdot r_t^{jvel} + 0.1 \cdot r_t^{epos} + 0.15 \cdot r_t^{bpose} + 0.1 \cdot r_t^{bvel} \qquad (6),$$

where rt is configured to indicate the target loss value, $r_t^{jpos}$ is configured to indicate the dimension loss value corresponding to the joint position dimension, $r_t^{jvel}$ is configured to indicate the dimension loss value corresponding to a joint velocity dimension, $r_t^{epos}$ is configured to indicate the dimension loss value corresponding to the root joint posture dimension, and $r_t^{bvel}$ is configured to indicate the dimension loss value of the root joint velocity dimension.

Operation 1083: Train the initial feature prediction network based on the target loss value.

In some embodiments, operation 1083 may be implemented in the following manner: training, through RL, the initial feature prediction network based on the target loss value.

In other embodiments, operation 1083 may be implemented in the following manner: updating, through gradient update, network parameters of the initial feature prediction network based on the target loss value.

In this way, the importance weights of the feature dimensions are acquired so that degrees of contribution of the features to the task may be better understood. This helps determine weights in the feature loss calculation, thereby better using important features. For each feature dimension, the dimension loss value is calculated according to the importance weight of the feature dimension and the corresponding sub-predicted action parameter and sub-label action parameter. This helps perform personalized loss calculation on each feature dimension in the training process to better guide network optimization. According to the importance weights of the feature dimensions, weighted summation is performed on the dimension loss values of the feature dimensions to obtain the target loss value. This helps take losses of different features into consideration and evaluate an overall loss situation. The initial feature prediction network is trained based on the target loss value. This allows the network to better adapt to task requirements, thereby improving the prediction accuracy and robustness. The training process of the network is optimized by considering the importance and loss of the features in more detail, thereby improving the performance and generalization capability of the model.

In this way, the initial feature prediction network is trained through the object state data configured to indicate the motion state of the target object and the label action parameter of the target object so that the initial feature prediction network has the performance of imitating the action of the target object. Initial action parameter prediction is performed on the robot based on the state data and the environmental data to obtain the initial action parameter for the robot so that the obtained initial action parameter can highly imitate the action of the target object, and the robot can highly simulate the target object.

Operation 103: Predict, based on the environmental data, an environmental impact parameter configured to represent environment impact on imitation of the object action by the robot.

In some embodiments, the environmental impact parameter is configured to indicate an impact degree of the environmental data on the initial action parameter.

In some embodiments, the environmental impact parameter is obtained through prediction by an environmental impact parameter prediction network, and the environmental impact parameter prediction network includes a data adjustment layer and an environmental parameter prediction layer.

In some embodiments, the environmental impact parameter prediction network has the performance of predicting the environmental impact. The environmental impact parameter prediction network may be trained through the sample state data so that the trained environmental impact parameter prediction network has the performance of predicting the environmental impact.

As an example, FIG. 9 is a schematic diagram of a network structure of an environmental impact parameter prediction network according to an embodiment of this application. The environmental impact parameter is obtained through prediction by the environmental impact parameter prediction network shown in FIG. 9, and the environmental impact parameter prediction network includes a data adjustment layer 91 and an environmental parameter prediction layer 92.

In some embodiments, FIG. 10 is a sixth schematic flowchart of a robot control method according to an embodiment of this application. Operation 103 shown in FIG. 3 may be implemented through operation 1031 to operation 1032 shown in FIG. 10.

Operation 1031: Invoke the data adjustment layer to perform data adjustment on the state data to obtain adjusted reference data.

As an example, referring to FIG. 9, an offset data adjustment layer 91 is invoked to perform data adjustment on state data $b_1$ to obtain adjusted reference data $b_2$.

Operation 1032: Invoke the environmental parameter prediction layer to perform environmental impact parameter prediction on the robot based on the adjusted reference data and the environmental data to obtain the environmental impact parameter of the robot.

As an example, referring to FIG. 9, an environmental parameter prediction layer 92 is invoked to perform environmental impact parameter prediction on the robot based on the adjusted reference data $b_2$ and environmental data $b_3$ to obtain environmental impact parameter $a_t^{TA}$ of the robot.

In this way, environmental impact parameter prediction is performed on the robot based on the adjusted reference data and the environmental data to obtain the environmental impact parameter of the robot so that the obtained environmental impact parameter can be highly adapted to the environment where the robot is located, and the robot can highly adapt to the environment to perform an action.

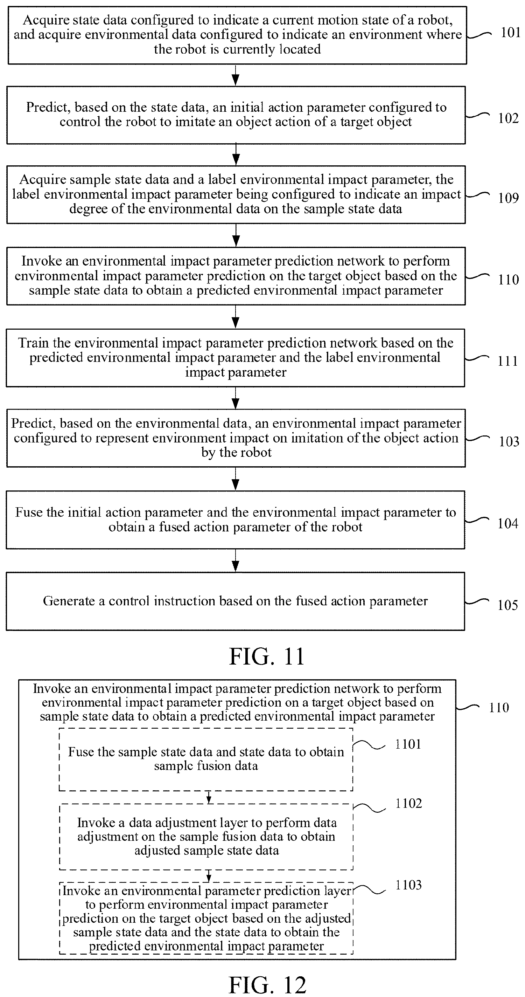

In some embodiments, FIG. 11 is a seventh schematic flowchart of a robot control method according to an embodiment of this application. Before operation 103 shown in FIG. 3, operation 109 to operation 111 may further be performed as follows to train the environmental impact parameter prediction network.

Operation 109: Acquire sample state data and a label environmental impact parameter, the label environmental impact parameter being configured to indicate an impact degree of the environmental data on the sample state data.

In some embodiments, the acquiring sample state data may be implemented in the following manner: acquiring test state information that is acquired by a state sensor provided on a test object and is configured to indicate a motion state of the test object, and performing feature extraction on the test state information to obtain the sample state data.

Operation 110: Invoke the environmental impact parameter prediction network to perform environmental impact parameter prediction on the target object based on the sample state data to obtain a predicted environmental impact parameter.

In some embodiments, FIG. 12 is an eighth schematic flowchart of a robot control method according to an embodiment of this application. Operation 110 shown in FIG. 11 may be implemented through operation 1101 to operation 1103 shown in FIG. 12.

Operation 1101: Fuse the sample state data and the state data to obtain sample fusion data.

As an example, referring to FIG. 9, sample state data $b_4$ and the state data $b_1$ are fused to obtain sample fusion data $b_5$.

Operation 1102: Invoke the data adjustment layer to perform data adjustment on the sample fusion data to obtain adjusted sample state data.

As an example, referring to FIG. 9, the offset data adjustment layer 91 is invoked to perform data adjustment on the sample state data $b_5$ to obtain offset adjustment state data $b_6$.

Operation 1103: Invoke the environmental parameter prediction layer to perform environmental impact parameter prediction on the target object based on the adjusted sample state data and the state data to obtain the predicted environmental impact parameter.

As an example, referring to FIG. 9, the environmental parameter prediction layer 92 is invoked to perform environmental impact parameter prediction on the target object based on the offset adjustment state data $b_6$ and the state data $b_1$ to obtain predicted environmental impact parameter $b_7$.

In this way, the sample state data and the state data are fused so that the features may be richer and more comprehensive, and more information may be captured. This helps improve the sample understanding and expression capability of the model. The sample state data is adjusted to obtain the offset adjustment state data. This helps introduce offset adjustment to the state when the sample is considered, so that the model can be more adaptive to changes in different scenarios. The action feature of the target object is predicted based on the adjusted feature. This may help understand the behavior of the target object and perform corresponding prediction. Accurate understanding and prediction of the target behavior is realized by fusing and adjusting the features and predicting the action feature of the target object, thereby providing support for subsequent application.

Operation 111: Train the environmental impact parameter prediction network based on the predicted environmental impact parameter and the label environmental impact parameter.

In some embodiments, operation 111 may be implemented in the following manner: training, through RL, the environmental impact parameter prediction network based on the predicted environmental impact parameter and the label environmental impact parameter.

In other embodiments, operation 111 may be implemented in the following manner: training, through gradient update, network parameters of the environmental impact parameter prediction network based on the predicted environmental impact parameter and the label environmental impact parameter.

In some embodiments, the predicted environmental impact parameter includes a plurality of sub-predicted environmental impact parameters, the label environmental impact parameter includes a plurality of sub-label environmental impact parameters, and the sub-predicted environmental impact parameter and the sub-label environmental impact parameter are in a one-to-one correspondence. The sub-predicted environmental impact parameter and a corresponding sub-label environmental impact parameter belong to the same feature dimension, and the sub-predicted environmental impact parameter and the feature dimension are in a one-to-one correspondence.

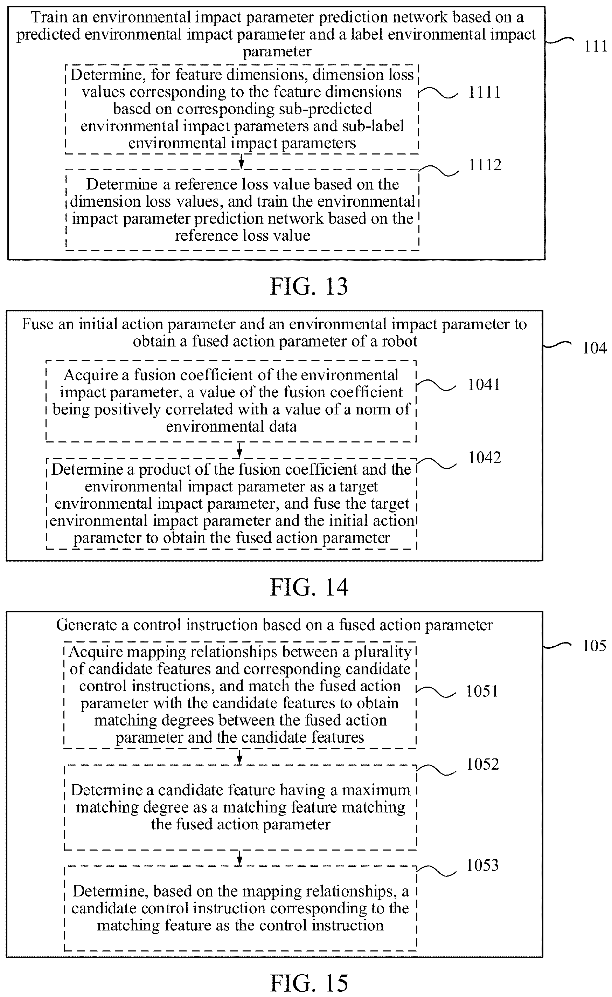

In some embodiments, FIG. 13 is a ninth schematic flowchart of a robot control method according to an embodiment of this application. Operation 111 shown in FIG. 11 may be implemented through operation 1111 to operation 1112 shown in FIG. 13.

Operation 1111: Determine, for the feature dimensions, dimension loss values corresponding to the feature dimensions based on corresponding sub-predicted environmental impact parameters and sub-label environmental impact parameters.

As an example, for the velocity dimension, an expression of a dimension loss value corresponding to the velocity dimension may be:

$$L1 = \exp(-|\hat{v}_t - v_t|) \qquad (7),$$

where L1 is configured to indicate the dimension loss value corresponding to the velocity dimension, $\hat{v}_t$ is configured to indicate a sub-predicted environmental impact parameter of the velocity dimension, and vt is configured to indicate a sub-label environmental impact parameter of the velocity dimension.

As an example, for an angular dimension, an expression of a dimension loss value corresponding to the angular dimension may be:

$$L2 = \exp\left(5 \cdot \left(\cos(\hat{\theta}_t - \theta_t) - 1\right)\right) \qquad (8),$$

where L2 is configured to indicate the dimension loss value corresponding to the angular dimension, $\hat{\theta}_t$ is configured to indicate a sub-predicted environmental impact parameter of the angular dimension, and $\hat{\theta}_t$ is configured to indicate a sub-label environmental impact parameter of the angular dimension.

Operation 1112: Determine a reference loss value based on the dimension loss values, and train the environmental impact parameter prediction network based on the reference loss value.

As an example, an expression of the reference loss value may be:

$$L = L1L2 = \exp(-|\hat{v}_t - v_t|) \exp\left(5 \cdot \left(\cos(\hat{\theta}_t - \theta_t) - 1\right)\right) \qquad (9),$$

where L is configured to indicate the reference loss value, L2 is configured to indicate the dimension loss value corresponding to the angular dimension, $\hat{\theta}_t$ is configured to indicate the sub-predicted environmental impact parameter of the angular dimension, $\theta_t$ is configured to indicate the sub-label environmental impact parameter corresponding to the angular dimension, L1 is configured to indicate the dimension loss value corresponding to the velocity dimension, $\hat{v}_t$ is configured to indicate the sub-predicted environmental impact parameter of the velocity dimension, and vt is configured to indicate the sub-label environmental impact parameter corresponding to the velocity dimension.

In this way, the environmental impact parameter prediction network is trained based on the predicted environmental impact parameter and the label environmental impact parameter so that the environmental impact parameter prediction network has the performance of analyzing the impact on the environmental data. Environmental impact parameter prediction is performed on the robot based on the state data and the environmental data to obtain the environmental impact parameter of the robot so that the obtained environmental impact parameter can be highly adapted to the environment where the robot is located, and the robot can highly adapt to the environment to perform an action.

Operation 104: Fuse the initial action parameter and the environmental impact parameter to obtain a fused action parameter for the robot.

In some embodiments, the foregoing fusion refers to a processing process of fusing at least two different features.

In some embodiments, FIG. 14 is a tenth schematic flowchart of a robot control method according to an embodiment of this application. Operation 104 shown in FIG. 3 may be implemented through operation 1041 to operation 1042 shown in FIG. 14.

Operation 1041: Acquire a fusion coefficient corresponding to the environmental impact parameter, a value of the fusion coefficient being positively correlated with a value of a norm of the environmental data.

In some embodiments, a larger value of the norm of the environmental data indicates a larger value of the corresponding fusion coefficient, and a smaller value of the norm of the environmental data indicates a smaller value of the corresponding fusion coefficient.

Operation 1042: Determine a product of the fusion coefficient and the environmental impact parameter as a target environmental impact parameter, and fuse the target environmental impact parameter and the initial action parameter to obtain the fused action parameter.

As an example, an expression of the target environmental impact parameter may be:

$$T = \alpha T_1 \qquad (10),$$

where T is configured to indicate the target environmental impact parameter, $\alpha$ is configured to indicate the fusion coefficient, and $T_1$ is configured to indicate the environmental impact parameter.

In this way, the initial action parameter and the environmental impact parameter are fused to obtain the fused action parameter for the robot. Since the obtained environmental impact parameter can be highly adapted to the environment where the robot is located, the robot can highly adapt to the environment to perform an action, and the obtained initial action parameter can highly imitate the action of the target object so that the robot can highly simulate the target object. Thus, the obtained fused action parameter can be highly adapted to the environment where the robot is located, and can highly simulate the target object.

Operation 105: Generate a control instruction based on the fused action parameter.

In some embodiments, the control instruction is configured to control the robot to move according to a target action indicated by the fused action parameter.

In some embodiments, FIG. 15 is an eleventh schematic flowchart of a robot control method according to an embodiment of this application. Operation 105 shown in FIG. 3 may be implemented through operation 1051 to operation 1053 shown in FIG. 15.

Operation 1051: Acquire mapping relationships between a plurality of candidate features and corresponding candidate control instructions, and match the fused action parameter with the candidate features to obtain matching degrees between the fused action parameter and the candidate features.

As an example, the mapping relationships between the plurality of candidate features and the corresponding candidate control instructions may be: a candidate feature A-a candidate control instruction A, a candidate feature B-a candidate control instruction B, a candidate feature C-a candidate control instruction C, and a candidate feature D-a candidate control instruction D. The fused action parameter is a candidate feature C1. The fused action parameter is matched with the candidate features to obtain matching degrees between the fused action parameter and the candidate features. For example, a matching degree between the fused action parameter C1 and the candidate feature C is 90%, a matching degree between the fused action parameter C1 and the candidate feature A is 20%, a matching degree between the fused action parameter C1 and the candidate feature B is 10%, and a matching degree between the fused action parameter C1 and the candidate feature D is 15%.

Operation 1052: Determine a candidate feature corresponding to a maximum matching degree as a matching feature matching the fused action parameter.

Following the foregoing example, the candidate feature C corresponding to the maximum matching degree 90% is determined as a matching feature matching the fused action parameter C1.

Operation 1053: Determine, based on the mapping relationships, a candidate control instruction corresponding to the matching feature as the control instruction.

Following the foregoing example, based on the mapping relationships: the candidate feature A-the candidate control instruction A, the candidate feature B-the candidate control instruction B, the candidate feature C-the candidate control instruction C, and the candidate feature D-the candidate control instruction D, the candidate control instruction C corresponding to the candidate feature C is determined as the control instruction.

In some embodiments, operation 105 may further be implemented in the following manner: acquiring an instruction prediction network, and invoking the instruction prediction network to obtain the control instruction through prediction based on the fused action parameter.

In some embodiments, when the robot is a legged robot, the number of legs of the legged robot is a positive integer greater than 1, and the control instruction includes sub-control instructions configured to control the legs. Operation 105 may be implemented in the following manner: determining, for the legs, sub-fused action parameters corresponding to the legs from the fused action parameter, and generating the sub-control instructions corresponding to the legs based on the sub-fused action parameters.

As an example, when the number of legs of the legged robot is 2, for a leg 1, a sub-fused action parameter 11 corresponding to the leg 1 is determined from the fused action parameter, and a sub-control instruction 111 corresponding to the leg 1 is generated based on the sub-fused action parameter 11. For a leg 2, a sub-fused action parameter 21 corresponding to the leg 2 is determined from the fused action parameter, and a sub-control instruction 211 corresponding to the leg 2 is generated based on the sub-fused action parameter 21.

In some embodiments, after operation 105, the legs may be controlled in the following manner: controlling, based on the sub-control instructions corresponding to the legs, the legs to move according to leg actions indicated by corresponding sub-fused action parameters.

Following the foregoing example, for the leg 1, based on the sub-control instruction 111 corresponding to the leg 1, the leg 1 is controlled to move according to a leg action indicated by the corresponding sub-fused action parameter 11. For the leg 2, based on the sub-control instruction 211 corresponding to the leg 2, the leg 2 is controlled to move according to a leg action indicated by the corresponding sub-fused action parameter 21.

In this way, initial action parameter prediction and environmental impact parameter prediction are performed on the robot to obtain the initial action parameter and the environmental impact parameter, and the initial action parameter and the environmental impact parameter are fused to obtain the fused action parameter for the robot. Since the obtained environmental impact parameter can be highly adapted to the environment where the robot is located, the robot can highly adapt to the environment to perform an action, and the obtained initial action parameter can highly imitate the action of the target object so that the robot can highly simulate the target object. Thus, the obtained fused action parameter can be highly adapted to the environment where the robot is located, and can highly simulate the target object. The control instruction generated based on the fused action parameter controls the robot to move according to the target action indicated by the fused action parameter so that the action performed by the robot can be highly adapted to the environment where the robot is located, and can highly simulate the target object, thereby effectively improving the motion performance of the robot.

Exemplary application of the embodiments of this application in an actual quadruped robot application scene will be described below.

The embodiments of this application propose a general learning framework to control the quadruped robot. The robot may imitate behaviors of real animals and traverse challenging terrains. The method in all embodiments of this application may include two operations: a first operation is imitation learning to learn from motions of real animals; and a second operation is a terrain adaptation operation so that unseen terrains can be generalized. In all embodiments of this application, an action capture system may be used for the motions of the Labrador on various terrains to promote the terrain adaptation motion. Experiments in all embodiments of this application show that the model in all embodiments of this application may traverse various terrains with a natural behavior. In all embodiments of this application, the method in all embodiments of this application may be deployed on a real quadruped robot, and a velocity of climbing stairs reaches 1.1 m/s.

The embodiments of this application may be applied to the following application scenes, including exploration and rescue: the quadruped robot may operate in various severe and complex environments, such as disaster sites, fires, and earthquakes, to provide assistance to rescue workers; agriculture: the quadruped robot may walk in the farmland, helping a farmer complete work such as seeding and harvesting; industrial production: the quadruped robot may carry weights in a factory, helping workers complete repetitive work; and the medical field: the quadruped robot may help the disabled to walk and provide support, and may further be configured for rehabilitation, blind guide, and the like.

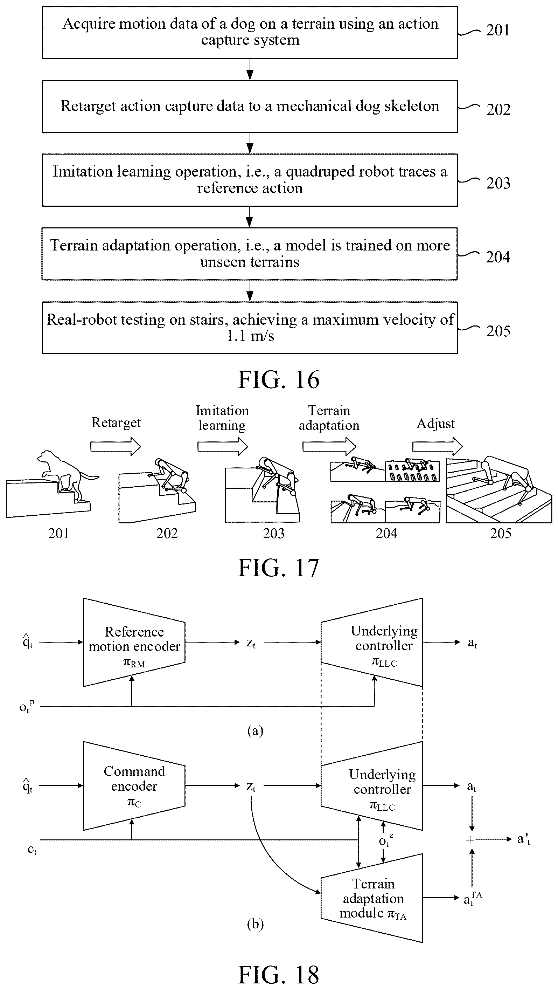

In some embodiments, FIG. 16 is a twelfth schematic flowchart of a robot control method according to an embodiment of this application, and FIG. 17 is a first schematic diagram of a principle of a robot control method according to an embodiment of this application. The robot control method provided in all embodiments of this application may be implemented through operation 201 to operation 205 shown in FIG. 16 to FIG. 17.

Operation 201: Acquire motion data of a dog on a terrain using an action capture system.

In some embodiments, the action capture system is a technology and usually records the motion of a creature or an object using a sensor, a camera, or other devices. In this case, the system may be adopted to learn the motion of the dog, for example, its gait, velocity, acceleration, and other possible related information. The data may be used for various purposes, including fields such as research of animal behaviors, training, and sports biomechanics.

Operation 202: Retarget action capture data to a mechanical dog skeleton.

In some embodiments, data (action capture data) acquired by the action capture system is retargeted or mapped to a skeletal structure of a mechanical dog. In this process, these motion modes are applied to the skeletal structure of the mechanical dog by analyzing the motion of a human or an animal recorded in the action capture data so that the mechanical dog can imitate or copy the motion of an original action. This process may involve converting information such as a joint angle and a body posture in the action capture data into an action instruction applicable to the mechanical dog so that the mechanical dog can perform a similar action according to the motion mode of the human or the animal. This technology is usually applied to fields such as film and television production, game development, and robot research.

Operation 203: Imitation learning operation, i.e., a quadruped robot traces a reference action.

In some embodiments, the quadruped robot learns by tracing the reference action, and imitation learning is an ML manner. A robot or an intelligent system learns to perform a specific task by observing and imitating behaviors of a human or another entity. In this case, the quadruped robot first observes or receives an example of a reference action. The reference action may be a specific action performed by a human or another animal, for example, walking, running, or another action. Then, the robot learns how to perform a similar action by tracing the reference action, i.e., trying to imitate the reference action.

Operation 204: Terrain adaptation operation, i.e., a model is trained on more unseen terrains.

In some embodiments, terrain adaptation refers to a robot or a model being able to adapt to different types of terrain environments or unknown terrain environments and change its behaviors or actions correspondingly. In this case, the model may refer to an ML model or a control system and is configured to guide motions or behaviors of the robot on various terrains to train the model on more different types of terrains, thereby improving the adaptability of the model to unknown terrains. Through training on various terrains, the model may learn a wider range of terrain features and conditions and adjust its behavior policy or action planning correspondingly.

Operation 205: Real-robot testing on stairs, achieving a maximum velocity of 1.1 m/s.

In all embodiments of this application, motion data is captured from Labrador using a motion capture system Vicon and retargeted to a quadruped robot Max. The method in all embodiments of this application may include two operations: an imitation learning operation and a terrain adaptation operation. In the imitation learning operation, in this embodiment of this application, all different reference motion segments are imitated using an encoder-decoder architecture. The encoder learns to map a sequence of a future reference motion frame to latent embedding representing a target future motion. The decoder learns to map this encoding together with ontological information and external sensory information to a joint motor driver command. In the subsequent terrain adaptation operation, in this embodiment of this application, the decoder is fixed to keep motion naturalness, and the policy is trained in various terrains in the manner of imitation learning. This results in a robust policy that can process different challenging terrains with a natural behavior.

In some embodiments, the goal of imitation learning is to optimize and train a single policy to imitate all reference motion trajectories:

$$\mathrm{argmin}_a \; \Sigma_{i,t} \left\| \hat{s}_{i,t+1} - P(s_{t+1}|s_t, a_t) \right\|_2^2 \qquad (11),$$

where s represents state information of a robot, including a joint position, a direction, a velocity, and the like. $\hat{s}_{i,t}$ is a state of a reference motion i at time t, and P represents a world dynamics model. In this embodiment of this application, imitation learning is expressed as an RL problem. In RL, the goal is to learn a policy $\pi$ to maximize its expected reward.

At each time step, an agent receives a state st and samples an action $a_t \sim \pi(a_t|s_t)$. The agent performs this operation and receives a new state $s_{t+1}$ and reward rt. In the task of this embodiment of this application, the reward is intended to encourage the robot to trace the reference motion.

In some embodiments, FIG. 18 is a second schematic diagram of a principle of a robot control method according to an embodiment of this application. A reference motion encoder $\pi_{RM}(z_t|\hat{q}_t, o_t^p)$ relies on a series of future reference motions $\hat{q}_t$ and proprioceptive information $o_t^p$, where $\hat{q}_t = \{\hat{q}_{t+1/30}, \hat{q}_{t+1/15}, \hat{q}_{t+1/3}, \hat{q}_{t+1}\}$, representing states of the future 1/30, 1/15, 1/3, and 1-second reference motions. $\pi_{RM}$ learns to map a future reference trajectory to a latent space and generate a random command zt. In this embodiment of this application, an output of $\pi_{RM}(z_t|\hat{q}_t, o_t^p)$ is modeled as Gaussian distribution with an average value of $\mu_t^z$ and a standard deviation of $\sigma_t^z$:

$$\pi_{RM}(z_t|\hat{q}_t, o_t^p) = N(\mu_t^z, \sigma_t^z) \qquad (12).$$

To ensure the Gaussian distribution of the latent space and enable more focused exploration in the terrain adaptation operation, in this embodiment of this application, a Kullback-Leibler (KL) divergence is used as a penalty to regularize the standard Gaussian distribution. This is similar to a conditional variational autoencoder (CVAE):

$$\beta E_{z \sim \pi_{RM}}[KL(\pi_{RM}(z_t|\hat{q}_t, o_t^p)|p_\theta(z_t|\hat{q}_t, o_t^p)] \qquad (13),$$

where $\beta = 0.03$, and $p_\theta(z_t|\hat{q}_t, o_t^p)$ is prior distribution, which is standard normal distribution in this embodiment of this application. Subsequently, an underlying controller $\pi_{LLC}(a_t|z_t, o_t^p, o_t^e)$ acquires a latent variable zt, ontological state information $o_t^p$, and external terrain information of and generates an action at for the robot. Parameters of the underlying controller are kept fixed and are repeatedly used in the subsequent terrain adaptation operation.

A reward function rt includes the following five parts: a joint position reward $r_t^{jpos}$, a joint velocity reward $r_t^{jvel}$, an end effector position reward $r_t^{epos}$, a root joint posture reward $r_t^{bpose}$, and a root joint velocity reward $r_t^{bvel}$:

$$r_t = 0.6 \cdot r_t^{jpos} + 0.05 \cdot r_t^{jvel} + 0.1 \cdot r_t^{epos} + 0.15 \cdot r_t^{bpose} + 0.1 \cdot r_t^{bvel} \qquad (14),$$

$$r_t^{jpos} = \exp(-\Sigma_j \left\| \hat{q}_t^j - q_t^j \right\|^2) \qquad (15),$$

$$r_t^{jvel} = \exp(-0.1 \sum_j \left\| \hat{\dot{q}}_t^j - \dot{q}_t^j \right\|^2) \qquad (16),$$

$$r_t^{epos} = \exp(-40 \sum_e \left\| \hat{p}_t^e - p_t^e \right\|^2) \qquad (17),$$

$$r_t^{bpose} = \exp(-20 \left\| \hat{p}_t^{base} - p_t^{base} \right\|^2 - 10 \left\| \hat{q}_t^{base} - q_t^{base} \right\|) \qquad (18),$$

and

$$r_t^{bvel} = \exp(-2 \left\| \hat{\dot{p}}_t^{base} - \dot{p}_t^{base} \right\|^2 - 0.2 \left\| \hat{\dot{q}}_t^{base} - \dot{q}_t^{base} \right\|^2) \qquad (19),$$

where $\hat{q}_t^j, \hat{\dot{q}}_t^j$ represents the 1D rotational motion and angular velocity of a joint j of the robot at time t, $p_t^e$ represents the end effector position, $\hat{p}_t^{base}, \hat{q}_t^{base}$ is the root joint position and rotation, $\hat{\dot{p}}_t^{base}, \hat{\dot{q}}_t^{base}$ represents the root joint linear velocity and angular velocity, and ($\hat{\,}$) represents the reference motion.

A policy trained in the imitation learning operation can trace the reference motion, but before the policy is deployed in the real world, some problems need to be resolved. First, an imitation learning policy can only trace a reference motion with a specific terrain from MoCap data set in all embodiments of this application, because changes of the terrain in the MoCap data set are limited. The data set in this embodiment of this application includes slopes and stairs of a fixed size. Therefore, tracing such a reference motion on terrains of different sizes may lead to failures. For example, when there are actually more steps, a motion of tracing three steps to climb the stair is very likely to result in a collision with the stair. Considering that the cost of acquiring a large amount of MoCap data in various terrains is very high, the goal of the embodiments of this application is to promote the policy in all embodiments of this application to various unseen terrains when terrains in the data set are limited.

In addition, the policy can only trace a predefined trajectory without human control. In this embodiment of this application, it is intended to control the robot given a target angle and velocity.

Therefore, the embodiments of this application propose a terrain adaptation operation. The goal of this operation is to extend the policy to various terrains under a given command. For this operation, the reference motion encoder is replaced with a command encoder $\pi_C(z_t | c_t, o_t^p)$. The encoder encodes a user command ct and ontological state information $o_t^p$. The user command ct = $(\cos(\hat{\theta}_t - \theta_t), \sin(\hat{\theta}_t - \theta_t), \hat{v}_t)$, where $\hat{\theta}_t, \theta_t, \hat{v}_t$ are a target angular velocity, an actual angular velocity, and a target linear velocity, respectively. The reward function is:

$$r_t = \exp(-|\hat{v}_t - v_t|) \cdot \exp\left(5 \cdot \left(\cos(\hat{\theta}_t - \theta_t) - 1\right)\right) \qquad (20).$$

To promote effects of the policy on different terrains, in this embodiment of this application, the robot is trained on seven different terrains using a course learning method. Since the generated terrain does not necessarily match the terrain in the data set in this embodiment of this application, this difference may reduce the performance. As a solution, in this embodiment of this application, an underlying controller may be provided simultaneously to adapt to unseen situations and improve the performance. However, this may lead to the problem of forgetting, that is, motion becomes unnatural and no longer resembles a real dog. To maintain the naturalness of motion, in this embodiment of this application, the underlying controller is fixed in the training process, and a terrain adaptation module $\pi_{TA}$ is provided to allow the policy to adapt to a new environment while keeping an original motion style. The terrain adaptation module $\pi_{TA} = (a_t^{TA} | z_t, o_t^p, o_t^e)$ generates an action offset $a_t^{TA}$. The offset is added to an output at of the underlying controller to improve the performance in unseen terrains:

$$a_t' = a_t + \alpha \cdot \tanh(a_t^{TA}) \qquad (21),$$

where $\alpha$ controls an impact degree of the terrain adaptation module on an action. There is a trade-off between adaptability and naturalness: when $\alpha$ is small, the policy keeps its original motion style but performs poorly on challenging terrains, and when $\alpha$ is large, the robot performs well on the terrain but loses naturalness. It is observed in this embodiment of this application that the terrain adaptation module is crucial for challenging terrains, while for a flat surface, the underlying controller may adequately handle it. Therefore, this embodiment of this application proposes a terrain adaptation parameter $\alpha$ to control the impact degree of the terrain adaptation module on the action:

$$\alpha = \begin{cases} 0.1, & \text{if std}(o_t^p) > 0.01 \\ 0, & \text{otherwise} \end{cases} \qquad (22).$$

In all embodiments of this application, the method in all embodiments of this application may be applied to the Max quadruped robot in the real world without any fine-tuning. Although perception is necessary for the robot, the embodiments of this application focus on imitation and terrain adaptation. Therefore, external perception information is directly acquired using the Vicon motion capture system. Specifically, in all embodiments of this application, a world height map with the same terrain height as in the real world is designed, and then the robot is positioned in the map using the Vicon. Therefore, in all embodiments of this application, terrain samples around the robot can be acquired. All ontological state information is measured by a sensor on the robot. In all embodiments of this application, the method in all embodiments of this application may be tested on planes, slopes, and stairs. For a stair terrain, the height of the first step is 18 cm, and the height of each of the remaining steps is 13 cm. According to the policy network in all embodiments of this application, a quick and agile behavior is learned, which is equivalent to an animal, and a velocity on stairs is 1.1 m/s. It is learned according to the embodiments of this application that, this is the fastest velocity that the Max robot has achieved when climbing stairs.

In this way, initial action parameter prediction and environmental impact parameter prediction are performed on the robot to obtain the initial action parameter and the environmental impact parameter, and the initial action parameter and the environmental impact parameter are fused to obtain the fused action parameter for the robot. Since the obtained environmental impact parameter can be highly adapted to the environment where the robot is located, the robot can highly adapt to the environment to perform an action, and the obtained initial action parameter can highly imitate the action of the target object so that the robot can highly simulate the target object. Thus, the obtained fused action parameter can be highly adapted to the environment where the robot is located, and can highly simulate the target object. The control instruction generated based on the fused action parameter controls the robot to move according to the target action indicated by the fused action parameter so that the action performed by the robot can be highly adapted to the environment where the robot is located, and can highly simulate the target object, thereby effectively improving the motion performance of the robot.

In all embodiments of this application, related data such as state data and environmental data are involved. When the embodiments of this application are applied to specific products or technologies, user permission or consent needs to be obtained, and the acquisition, use, and processing of related data need to comply with relevant laws, regulations, and standards of relevant countries and regions.

The following continues to describe an exemplary structure in which a robot control apparatus 455 provided in all embodiments of this application may be implemented as software modules. In some embodiments, as shown in FIG. 2, the software modules of the robot control apparatus 455 stored in the memory 450 may include: a feature acquisition module 4551 configured to acquire state data configured to indicate a current motion state of a robot, and acquire environmental data configured to indicate an environment where the robot is currently located; an initial action prediction module 4552 configured to predict, based on the state data, an initial action parameter configured to control the robot to imitate an object action of a target object; an offset action prediction module 4553 configured to predict, based on the environmental data, an environmental impact parameter configured to represent environment impact on imitation of the object action by the robot; a fusion module 4554 configured to fuse the initial action parameter and the environmental impact parameter to obtain a fused action parameter for the robot; and a generation module 4555 configured to generate a control instruction based on the fused action parameter, the control instruction being configured to control the robot to perform a target action indicated by the fused action parameter.

In some embodiments, the initial action parameter is obtained through prediction by an initial feature prediction network, and the initial feature prediction network includes an initial data adjustment layer and an initial parameter prediction layer. The initial action prediction module is further configured to invoke the initial data adjustment layer to perform data adjustment on the state data to obtain initial reference data; and invoke the initial parameter prediction layer to perform action parameter prediction on the robot based on the initial reference data and the environmental data to obtain the initial action parameter for the robot.

In some embodiments, the initial action prediction module is further configured to acquire object state data configured to indicate a motion state of the target object, and a label action parameter of the target object; invoke the initial feature prediction network to perform action parameter prediction on the target object based on the object state data to obtain a predicted action parameter of the target object; and train the initial feature prediction network based on the predicted action parameter and the label action parameter.

In some embodiments, the initial action prediction module is further configured to fuse the object state data and the state data to obtain state fusion data; invoke the initial data adjustment layer to perform data adjustment on the state fusion data to obtain initial adjustment state data; and invoke the initial parameter prediction layer to perform action parameter prediction on the target object based on the initial adjustment state data and the state data to obtain the predicted action parameter of the target object.

In some embodiments, the predicted action parameter includes a plurality of sub-predicted action parameters, the label action parameter includes a plurality of sub-label action parameters, and the sub-predicted action parameter and the sub-label action parameter are in a one-to-one correspondence; the sub-predicted action parameter and a corresponding sub-label action parameter belong to the same feature dimension, and the sub-predicted action parameter and the feature dimension are in a one-to-one correspondence. The initial action prediction module is further configured to acquire, for feature dimensions, importance weights of the feature dimensions, and determine dimension loss values corresponding to the feature dimensions based on corresponding sub-predicted action parameters and sub-label action parameters; perform, according to the importance weights of the feature dimensions, weighted summation on the dimension loss values corresponding to the feature dimensions to obtain a target loss value; and train the initial feature prediction network based on the target loss value.

In some embodiments, the environmental impact parameter is obtained through prediction by an environmental impact parameter prediction network, and the environmental impact parameter prediction network includes a data adjustment layer and an environmental parameter prediction layer. The initial action prediction module is further configured to invoke the data adjustment layer to perform data adjustment on the state data to obtain adjusted reference data; and invoke the environmental parameter prediction layer to perform environmental impact parameter prediction on the robot based on the adjusted reference data and the environmental data to obtain the environmental impact parameter of the robot.

In some embodiments, the initial action prediction module is further configured to acquire sample state data and a label environmental impact parameter, the label environmental impact parameter being configured to indicate an impact degree of the environmental data on the sample state data; invoke the environmental impact parameter prediction network to perform environmental impact parameter prediction on the target object based on the sample state data to obtain a predicted environmental impact parameter; and train the environmental impact parameter prediction network based on the predicted environmental impact parameter and the label environmental impact parameter.

In some embodiments, the initial action prediction module is further configured to fuse the sample state data and the state data to obtain sample fusion data; invoke the data adjustment layer to perform data adjustment on the sample fusion data to obtain adjusted sample state data; and invoke the environmental parameter prediction layer to perform action parameter prediction on the target object based on the adjusted sample state data and the state data to obtain the predicted environmental impact parameter.

In some embodiments, the predicted environmental impact parameter includes a plurality of sub-predicted environmental impact parameters, the label environmental impact parameter includes a plurality of sub-label environmental impact parameters, and the sub-predicted environmental impact parameter and the sub-label environmental impact parameter are in a one-to-one correspondence; the sub-predicted environmental impact parameter and a corresponding sub-label environmental impact parameter belong to the same feature dimension, and the sub-predicted environmental impact parameter and the feature dimension are in a one-to-one correspondence. The offset action prediction module is further configured to determine, for the feature dimensions, dimension loss values corresponding to the feature dimensions based on corresponding sub-predicted environmental impact parameters and sub-label environmental impact parameters; and determine a reference loss value based on the dimension loss values, and train the environmental impact parameter prediction network based on the reference loss value.

In some embodiments, the fusion module is further configured to acquire a fusion coefficient corresponding to the environmental impact parameter, a value of the fusion coefficient being positively correlated with a value of a norm of the environmental data; and determine a product of the fusion coefficient and the environmental impact parameter as a target environmental impact parameter, and fuse the target environmental impact parameter and the initial action parameter to obtain the fused action parameter.

In some embodiments, the generation module is further configured to acquire mapping relationships between a plurality of candidate features and corresponding candidate control instructions, and match the fused action parameter with the candidate features to obtain matching degrees between the fused action parameter and the candidate features; determine a candidate feature corresponding to a maximum matching degree as a matching feature matching the fused action parameter; and determine, based on the mapping relationships, a candidate control instruction corresponding to the matching feature as the control instruction.

In some embodiments, the feature acquisition module is further configured to acquire state information acquired by a state sensor provided on the robot, the state information being configured to indicate the current motion state of the robot; perform feature extraction on the state information to obtain the state data; acquire environmental information acquired by an environmental sensor provided on the robot, the environmental information being configured to indicate the environment where the robot is currently located; and perform feature extraction on the environmental information to obtain the environmental data.

In some embodiments, when the robot is a legged robot, the number of legs of the legged robot is a positive integer greater than 1, and the control instruction includes sub-control instructions configured to control the legs. The generation module is further configured to determine, for the legs, sub-fused action parameters corresponding to the legs from the fused action parameter, and generate the sub-control instructions corresponding to the legs based on the sub-fused action parameters. The generation module is further configured to control, based on the sub-control instructions corresponding to the legs, the legs to move according to leg actions indicated by corresponding sub-fused action parameters.

The embodiments of this application provide a computer program product. The computer program product includes a computer program or a computer-executable instruction. The computer program or the computer-executable instruction is stored in a computer-readable storage medium. A processor of an electronic device reads the computer-executable instruction from the computer-readable storage medium and executes the computer-executable instruction to cause the electronic device to perform the robot control method provided in all embodiments of this application.

The embodiments of this application provide a computer-readable storage medium, having a computer-executable instruction stored therein. When the computer-executable instruction is executed by a processor, the processor is enabled to perform the robot control method provided in all embodiments of this application, for example, the robot control method shown in FIG. 3.

In some embodiments, the computer-readable storage medium may be a ROM, a RAM, an erasable programmable ROM (EPROM), a flash memory, a magnetic surface memory, a CD, a CD-ROM, or the like. The computer-readable storage medium may alternatively be various electronic devices including one or any combination of the foregoing memories.

In some embodiments, the computer-executable instruction may be written in the form of a program, software, software module, script, or code in any form of programming language (including compilation or interpretation language, or declarative or procedural language), and may be deployed in any form, including being deployed as an independent program or being deployed as a module, component, subroutine, or another unit suitable for use in a computing environment.

As an example, the computer-executable instruction may but may not necessarily correspond to a file in a file system, may be stored in a part of the file for storing other programs or data, for example, stored in one or more scripts in a hyper text markup language (HTML) document, stored in a single file dedicated to the discussed program, or stored in a plurality of collaborative files (for example, files storing one or more modules, a subprogram, or a code part).

In all embodiments of this application, the term "module" or "unit" refers to a computer program having a predetermined function or a part of a computer program, works together with other relevant parts to achieve a predetermined objective, and may be all or partially implemented through software, hardware (such as a processing circuit or a memory), or a combination thereof. Similarly, one processor (or a plurality of processors or memories) may be configured to implement one or more modules or units. In addition, each module or unit may be a part of an overall module or unit including a function of the module or unit.

As an example, the computer-executable instruction may be deployed to be executed on one electronic device, on a plurality of electronic devices located at one location, or on a plurality of electronic devices distributed at a plurality of locations and interconnected through a communication network.

In summary, the embodiments of this application have the following beneficial effects.

(1) Initial action parameter prediction and environmental impact parameter prediction are performed on the robot to obtain the initial action parameter and the environmental impact parameter, and the initial action parameter and the environmental impact parameter are fused to obtain the fused action parameter for the robot. Since the obtained environmental impact parameter can be highly adapted to the environment where the robot is located, the robot can highly adapt to the environment to perform an action, and the obtained initial action parameter can highly imitate the action of the target object so that the robot can highly simulate the target object. Thus, the obtained fused action parameter can be highly adapted to the environment where the robot is located, and can highly simulate the target object. The control instruction generated based on the fused action parameter controls the robot to move according to the target action indicated by the fused action parameter so that the action performed by the robot can be highly adapted to the environment where the robot is located, and can highly simulate the target object, thereby effectively improving the motion performance of the robot.

(2) Initial action parameter prediction is performed on the robot based on the state data and the environmental data to obtain the initial action parameter for the robot so that the obtained initial action parameter can highly imitate the action of the target object, and the robot can highly simulate the target object.

(3) The initial feature prediction network is trained through the object state data configured to indicate the motion state of the target object and the label action parameter of the target object so that the initial feature prediction network has the performance of imitating the action of the target object. Initial action parameter prediction is performed on the robot based on the state data and the environmental data to obtain the initial action parameter for the robot so that the obtained initial action parameter can highly imitate the action of the target object, and the robot can highly simulate the target object.

(4) Environmental impact parameter prediction is performed on the robot based on the adjusted reference data and the environmental data to obtain the environmental impact parameter of the robot so that the obtained environmental impact parameter can be highly adapted to the environment where the robot is located, and the robot can highly adapt to the environment to perform an action.

(5) The environmental impact parameter prediction network is trained based on the predicted environmental impact parameter and the label environmental impact parameter so that the environmental impact parameter prediction network has the performance of analyzing the impact on the environmental data. Environmental impact parameter prediction is performed on the robot based on the state data and the environmental data to obtain the environmental impact parameter of the robot so that the obtained environmental impact parameter can be highly adapted to the environment where the robot is located, and the robot can highly adapt to the environment to perform an action.

(6) The initial action parameter and the environmental impact parameter are fused to obtain the fused action parameter for the robot. Since the obtained environmental impact parameter can be highly adapted to the environment where the robot is located, the robot can highly adapt to the environment to perform an action, and the obtained initial action parameter can highly imitate the action of the target object so that the robot can highly simulate the target object. Thus, the obtained fused action parameter can be highly adapted to the environment where the robot is located, and can highly simulate the target object.

(7) Different types of information may be integrated by fusing the object state data and the state data, thereby enhancing the feature richness and the expression capability. This helps improve the performance and accuracy of subsequent operations. The initial feature is adjusted to be more suitable for a target task or scene. This helps resolve a mismatch or deviation between features, thereby improving the accuracy of subsequent action parameter prediction. The action of the target object is predicted based on the adjusted feature. This may help understand a behavior pattern of the target object, thereby providing useful information for subsequent decision-making and control. Feature fusion, adjustment, and prediction realize accurate understanding and prediction of the action of the target object, thereby providing support for subsequent application.

(8) The importance weights of the feature dimensions are acquired so that degrees of contribution of the features to the task may be better understood. This helps determine weights in the feature loss calculation, thereby better using important features. For each feature dimension, the dimension loss value is calculated according to the importance weight of the feature dimension and the corresponding sub-predicted action parameter and sub-label action parameter. This helps perform personalized loss calculation on each feature dimension in the training process to better guide network optimization. According to the importance weights of the feature dimensions, weighted summation is performed on the dimension loss values of the feature dimensions to obtain the target loss value. This helps take losses of different features into consideration and evaluate an overall loss situation. The initial feature prediction network is trained based on the target loss value. This allows the network to better adapt to task requirements, thereby improving the prediction accuracy and robustness. The training process of the network is optimized by considering the importance and loss of the features in more detail, thereby improving the performance and generalization capability of the model.

(9) The sample state data and the state data are fused so that the features may be richer and more comprehensive, and more information may be captured. This helps improve the sample understanding and expression capability of the model. The sample state data is adjusted to obtain the offset adjustment state data. This helps introduce offset adjustment to the state when the sample is considered, so that the model can be more adaptive to changes in different scenarios. The action feature of the target object is predicted based on the adjusted feature. This may help understand the behavior of the target object and perform corresponding prediction. Accurate understanding and prediction of the target behavior is realized by fusing and adjusting the features and predicting the action feature of the target object, thereby providing support for subsequent application.

The foregoing descriptions are merely embodiments of this application and are not intended to limit the protection scope of this application. Any modification, equivalent replacement, or improvement made within the spirit and scope of this application falls within the protection scope of this application.

**Claims**

1.  A robot control method, comprising the following operations:

    acquiring state data configured to indicate a current motion state of a robot, and acquiring current environmental data configured to indicate an environment in which the robot is located;
    predicting, based on the state data, an initial action parameter configured to control the robot to imitate an object action of a target object;
    predicting, based on the environmental data, an environmental impact parameter configured to represent environment impact on imitation of the object action by the robot;
    fusing the initial action parameter and the environmental impact parameter to obtain a fused action parameter for the robot; and
    generating a control instruction based on the fused action parameter, the control instruction being configured to control the robot to perform a target action indicated by the fused action parameter.

2.  The method according to claim 1, wherein the initial action parameter is obtained through prediction by an initial feature prediction network, and the initial feature prediction network comprises an initial data adjustment layer and an initial parameter prediction layer; and the predicting, based on the state data, an initial action parameter configured to control the robot to imitate an object action of a target object comprises:

    invoking the initial data adjustment layer to perform data adjustment on the state data to obtain initial reference data; and
    invoking the initial parameter prediction layer to perform action parameter prediction on the robot based on the initial reference data and the environmental data to obtain the initial action parameter for the robot.

3.  The method according to claim 2, wherein before the predicting, based on the state data, an initial action parameter configured to control the robot to imitate an object action of a target object, the method further comprises:

    acquiring object state data configured to indicate a motion state of the target object, and a label action parameter of the target object;
    invoking the initial feature prediction network to perform action parameter prediction on the target object based on the object state data to obtain a predicted action parameter of the target object; and
    training the initial feature prediction network based on the predicted action parameter and the label action parameter.

4.  The method according to claim 3, wherein the invoking the initial feature prediction network to perform action parameter prediction on the target object based on the object state data to obtain a predicted action parameter of the target object comprises:

    fusing the object state data and the state data to obtain state fusion data;
    invoking the initial data adjustment layer to perform data adjustment on the state fusion data to obtain initial adjustment state data; and
    invoking the initial parameter prediction layer to perform action parameter prediction on the target object based on the initial adjustment state data and the state data to obtain the predicted action parameter of the target object.

5.  The method according to any one of claims 3 to 4, wherein the predicted action parameter comprises a plurality of sub-predicted action parameters, the label action parameter comprises a plurality of sub-label action parameters, and the sub-predicted action parameter and the sub-label action parameter are in a one-to-one correspondence; the sub-predicted action parameter and a corresponding sub-label action parameter belong to the same feature dimension, and the sub-predicted action parameter and the feature dimension are in a one-to-one correspondence; and the training the initial feature prediction network based on the predicted action parameter and the label action parameter comprises:

acquiring, for feature dimensions, importance weights of the feature dimensions, and determining dimension loss values for the feature dimensions based on corresponding sub-predicted action parameters and sub-label action parameters;

performing, according to the importance weights of the feature dimensions, weighted summation on the dimension loss values for the feature dimensions to obtain a target loss value; and

training the initial feature prediction network based on the target loss value.

6. The method according to any one of claims 1 to 5, wherein the environmental impact parameter is obtained through prediction by an environmental impact parameter prediction network, and the environmental impact parameter prediction network comprises a data adjustment layer and an environmental parameter prediction layer; and the predicting, based on the environmental data, an environmental impact parameter configured to represent environment impact on imitation of the object action by the robot comprises:

invoking the data adjustment layer to perform data adjustment on the state data to obtain adjusted reference data; and

invoking the environmental parameter prediction layer to perform environmental impact parameter prediction on the robot based on the adjusted reference data and the environmental data to obtain the environmental impact parameter of the robot.

7. The method according to any one of claims 1 to 6, wherein before the predicting, based on the environmental data, an environmental impact parameter configured to represent environment impact on imitation of the object action by the robot, the method further comprises:

acquiring sample state data and a label environmental impact parameter, the label environmental impact parameter being configured to indicate an impact degree of the environmental data on the sample state data;

invoking the environmental impact parameter prediction network to perform environmental impact parameter prediction on the target object based on the sample state data to obtain a predicted environmental impact parameter; and

training the environmental impact parameter prediction network based on the predicted environmental impact parameter and the label environmental impact parameter.

8. The method according to any one of claims 1 to 7, wherein the invoking the environmental impact parameter prediction network to perform environmental impact parameter prediction on the target object based on the sample state data to obtain a predicted environmental impact parameter comprises:

fusing the sample state data and the state data to obtain sample fusion data;

invoking the data adjustment layer to perform data adjustment on the sample fusion data to obtain adjusted sample state data; and

invoking the environmental parameter prediction layer to perform action parameter prediction on the target object based on the adjusted sample state data and the state data to obtain the predicted environmental impact parameter.

9. The method according to any one of claims 1 to 8, wherein the predicted environmental impact parameter comprises a plurality of sub-predicted environmental impact parameters, the label environmental impact parameter comprises a plurality of sub-label environmental impact parameters, and the sub-predicted environmental impact parameter and the sub-label environmental impact parameter are in a one-to-one correspondence; the sub-predicted environmental impact parameter and a corresponding sub-label environmental impact parameter belong to the same feature dimension, and the sub-predicted environmental impact parameter and the feature dimension are in a one-to-one correspondence; and

the training the environmental impact parameter prediction network based on the predicted environmental impact parameter and the label environmental impact parameter comprises:

determining, for the feature dimensions, dimension loss values for the feature dimensions based on corresponding sub-predicted environmental impact parameters and sub-label environmental impact parameters; and

determining a reference loss value based on the dimension loss values, and training the environmental impact parameter prediction network based on the reference loss value.

10. The method according to any one of claims 1 to 9, wherein the fusing the initial action parameter and the environmental impact parameter to obtain a fused action parameter for the robot comprises:

> acquiring a fusion coefficient of the environmental impact parameter, a value of the fusion coefficient being positively correlated with a value of a norm of the environmental data; and
>
> determining a product of the fusion coefficient and the environmental impact parameter as a target environmental impact parameter, and fusing the target environmental impact parameter and the initial action parameter to obtain the fused action parameter.

11. The method according to any one of claims 1 to 10, wherein the generating a control instruction based on the fused action parameter comprises:

> acquiring mapping relationships between a plurality of candidate features and corresponding candidate control instructions, and matching the fused action parameter with the candidate features to obtain matching degrees between the fused action parameter and the candidate features;
>
> determining a candidate feature having a maximum matching degree as a matching feature matching the fused action parameter; and
>
> determining, based on the mapping relationships, a candidate control instruction corresponding to the matching feature as the control instruction.

12. The method according to any one of claims 1 to 11, wherein
the acquiring state data configured to indicate a current motion state of a robot comprises:

> acquiring state information acquired by a state sensor provided on the robot, the state information being configured to indicate the current motion state of the robot; and
>
> performing feature extraction on the state information to obtain the state data; and
>
> the acquiring environmental data configured to indicate an environment in which the robot is located comprises:
>
>> acquiring environmental information acquired by an environmental sensor provided on the robot, the environmental information being configured to indicate the environment in which the robot is located; and
>>
>> performing feature extraction on the environmental information to obtain the environmental data.

13. The method according to any one of claims 1 to 12, wherein when the robot is a legged robot, the number of legs of the legged robot is a positive integer greater than 1, and the control instruction comprises sub-control instructions configured to control the legs; and
the generating a control instruction based on the fused action parameter comprises:

> determining, for the legs, sub-fused action parameters for the legs from the fused action parameter, and generating the sub-control instructions for the legs based on the sub-fused action parameters; and
>
> after the generating a control instruction based on the fused action parameter, the method further comprises:
>
> controlling, based on the sub-control instructions for the legs, the legs according to leg actions indicated by the sub-fused action parameters.

14. A robot control apparatus, comprising:

> a feature acquisition module configured to acquire state data configured to indicate a current motion state of a robot, and acquire environmental data configured to indicate an environment in which the robot is located;
>
> an initial action prediction module configured to predict, based on the state data, an initial action parameter configured to control the robot to imitate an object action of a target object;
>
> an offset action prediction module configured to predict, based on the environmental data, an environmental impact parameter configured to represent environment impact on imitation of the object action by the robot;
>
> a fusion module configured to fuse the initial action parameter and the environmental impact parameter to obtain a fused action parameter for the robot; and
>
> a generation module configured to generate a control instruction based on the fused action parameter, the control instruction being configured to control the robot to perform a target action indicated by the fused action parameter.

15. An electronic device, comprising:

> a memory configured to store a computer-executable instruction or a computer program; and

a processor configured to implement, when executing the computer-executable instruction or the computer program stored in the memory, the robot control method according to any one of claims 1 to 13.

16. A computer-readable storage medium, having a computer-executable instruction stored therein, the computer-executable instruction, when executed by a processor, implementing the robot control method according to any one of claims 1 to 13.

17. A computer program product, comprising a computer program or a computer-executable instruction, the computer program or the computer-executable instruction, when executed by a processor, implementing the robot control method according to any one of claims 1 to 13.

100

Server <u>200</u>

Network <u>300</u>

400

410-1

410

App

## FIG. 1

Electronic device 500

Memory 450

Operating system <u>451</u>

Network communication module <u>452</u>

Robot control apparatus 455

Network interface <u>420</u>

Processor <u>430</u>

440

| Feature acquisition module <u>4551</u> |
| Initial action prediction module <u>4552</u> |
| Offset action prediction module <u>4553</u> |
| Fusion module <u>4554</u> |
| Generation module <u>4555</u> |

## FIG. 2

| Acquire state data configured to indicate a current motion state of a robot, and acquire current environmental data configured to indicate an environment in which the robot is located | 101 |

| Predict, based on the state data, an initial action parameter configured to control the robot to imitate an object action of a target object | 102 |

| Predict, based on the environmental data, an environmental impact parameter configured to represent environment impact on imitation of the object action by the robot | 103 |

| Fuse the initial action parameter and the environmental impact parameter to obtain a fused action parameter of the robot | 104 |

| Generate a control instruction based on the fused action parameter | 105 |

## FIG. 3

Predict, based on state data, an initial action parameter configured to control a robot to imitate an object action of a target object — 102

Invoke an initial data adjustment layer to perform data adjustment on the state data to obtain initial reference data — 1021

Invoke an initial parameter prediction layer to perform action parameter prediction on the robot based on the initial reference data and environmental data to obtain the initial action parameter of the robot — 1022

## FIG. 4

$a_1$ → Initial data adjustment layer 51 → $a_2$ → Initial parameter prediction layer 52 → $a_t$

$a_3$

$a_4$, $a_5$ → $a_6$ → Initial data adjustment layer 51 → $a_7$ → Initial parameter prediction layer 52 → $a_8$

$a_1$

## FIG. 5

Acquire state data configured to indicate a current motion state of a robot, and acquire environmental data configured to indicate an environment where the robot is currently located —— 101

Acquire object state data configured to indicate a motion state of a target object, and a label action parameter of the target object —— 106

Invoke an initial feature prediction network to perform action parameter prediction on the target object based on the object state data to obtain a predicted action parameter of the target object —— 107

Train the initial feature prediction network based on the predicted action parameter and the label action parameter —— 108

Predict, based on the state data, an initial action parameter configured to control the robot to imitate an object action of the target object —— 102

Predict, based on the environmental data, an environmental impact parameter configured to represent environment impact on imitation of the object action by the robot —— 103

Fuse the initial action parameter and the environmental impact parameter to obtain a fused action parameter of the robot —— 104

Generate a control instruction based on the fused action parameter —— 105

## FIG. 6

Invoke an initial feature prediction network to perform action parameter prediction on a target object based on object state data to obtain a predicted action parameter of the target object —— 107

Fuse the object state data and state data to obtain state fusion data —— 1071

Invoke an initial data adjustment layer to perform data adjustment on the state fusion data to obtain initial adjustment state data —— 1072

Invoke an initial parameter prediction layer to perform action parameter prediction on the target object based on the initial adjustment state data and the state data to obtain the predicted action parameter of the target object —— 1073

## FIG. 7

Train an initial feature prediction network based on a predicted action parameter and a label action parameter 108

Acquire, for feature dimensions, importance weights of the feature dimensions, and determine dimension loss values corresponding to the feature dimensions based on corresponding sub-predicted action parameters and sub-label action parameters 1081

Perform, according to the importance weights of the feature dimensions, weighted summation on the dimension loss values corresponding to the feature dimensions to obtain a target loss value 1082

Train the initial feature prediction network based on the target loss value 1083

FIG. 8

b1 → Data adjustment layer 91 → b2 → Environmental parameter prediction layer 92 → $a_t^{TA}$
b3 →

b5
b4 → Data adjustment layer 91 → b6 → Environmental parameter prediction layer 92 → b7
b1

FIG. 9

Predict, based on environmental data, an environmental impact parameter configured to represent environment impact on imitation of an object action by a robot 103

Invoke a data adjustment layer to perform data adjustment on state data to obtain adjusted reference data 1031

Invoke an environmental parameter prediction layer to perform environmental impact parameter prediction on the robot based on the adjusted reference data and the environmental data to obtain the environmental impact parameter of the robot 1032

FIG. 10

Acquire state data configured to indicate a current motion state of a robot, and acquire environmental data configured to indicate an environment where the robot is currently located — 101

Predict, based on the state data, an initial action parameter configured to control the robot to imitate an object action of a target object — 102

Acquire sample state data and a label environmental impact parameter, the label environmental impact parameter being configured to indicate an impact degree of the environmental data on the sample state data — 109

Invoke an environmental impact parameter prediction network to perform environmental impact parameter prediction on the target object based on the sample state data to obtain a predicted environmental impact parameter — 110

Train the environmental impact parameter prediction network based on the predicted environmental impact parameter and the label environmental impact parameter — 111

Predict, based on the environmental data, an environmental impact parameter configured to represent environment impact on imitation of the object action by the robot — 103

Fuse the initial action parameter and the environmental impact parameter to obtain a fused action parameter of the robot — 104

Generate a control instruction based on the fused action parameter — 105

FIG. 11

Invoke an environmental impact parameter prediction network to perform environmental impact parameter prediction on a target object based on sample state data to obtain a predicted environmental impact parameter — 110

Fuse the sample state data and state data to obtain sample fusion data — 1101

Invoke a data adjustment layer to perform data adjustment on the sample fusion data to obtain adjusted sample state data — 1102

Invoke an environmental parameter prediction layer to perform environmental impact parameter prediction on the target object based on the adjusted sample state data and the state data to obtain the predicted environmental impact parameter — 1103

FIG. 12

Train an environmental impact parameter prediction network based on a predicted environmental impact parameter and a label environmental impact parameter — 111

> Determine, for feature dimensions, dimension loss values corresponding to the feature dimensions based on corresponding sub-predicted environmental impact parameters and sub-label environmental impact parameters — 1111

> Determine a reference loss value based on the dimension loss values, and train the environmental impact parameter prediction network based on the reference loss value — 1112

## FIG. 13

Fuse an initial action parameter and an environmental impact parameter to obtain a fused action parameter of a robot — 104

> Acquire a fusion coefficient of the environmental impact parameter, a value of the fusion coefficient being positively correlated with a value of a norm of environmental data — 1041

> Determine a product of the fusion coefficient and the environmental impact parameter as a target environmental impact parameter, and fuse the target environmental impact parameter and the initial action parameter to obtain the fused action parameter — 1042

## FIG. 14

Generate a control instruction based on a fused action parameter — 105

> Acquire mapping relationships between a plurality of candidate features and corresponding candidate control instructions, and match the fused action parameter with the candidate features to obtain matching degrees between the fused action parameter and the candidate features — 1051

> Determine a candidate feature having a maximum matching degree as a matching feature matching the fused action parameter — 1052

> Determine, based on the mapping relationships, a candidate control instruction corresponding to the matching feature as the control instruction — 1053

## FIG. 15

| Acquire motion data of a dog on a terrain using an action capture system | 201 |

| Retarget action capture data to a mechanical dog skeleton | 202 |

| Imitation learning operation, i.e., a quadruped robot traces a reference action | 203 |

| Terrain adaptation operation, i.e., a model is trained on more unseen terrains | 204 |

| Real-robot testing on stairs, achieving a maximum velocity of 1.1 m/s | 205 |

## FIG. 16

Retarget → Imitation learning → Terrain adaptation → Adjust

201  202  203  204  205

## FIG. 17

(a)

(b)

## FIG. 18

## INTERNATIONAL SEARCH REPORT

| International application No. |
| --- |
| **PCT/CN2024/100652** |

**A. CLASSIFICATION OF SUBJECT MATTER**

B25J9/16(2006.01)i

According to International Patent Classification (IPC) or to both national classification and IPC

**B. FIELDS SEARCHED**

Minimum documentation searched (classification system followed by classification symbols)

IPC: B25J G05D

Documentation searched other than minimum documentation to the extent that such documents are included in the fields searched

Electronic data base consulted during the international search (name of data base and, where practicable, search terms used)

CNTXT, WPABS, WPABSC, DWPI: 腾讯科技, 多足, 四足, 八足, 初始, 当前, 数据, 参数, 状态, 环境, 融合, 目标对象, 目标动作, 模仿, 模拟, multi, foot, feet, initial, current, data, parameter, state, environment, fusion, target, subject, action, simulate, imitate

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116945175 A (TENCENT TECHNOLOGY (SHENZHEN) CO., LTD.) 27 October 2023 (2023-10-27)<br>entire document | 1-17 |
| X | CN 113515135 A (BEIJING BAIDU NETCOM SCIENCE AND TECHNOLOGY CO., LTD.) 19 October 2021 (2021-10-19)<br>description, paragraphs 36-164, and figures 1-9 | 1, 12-17 |
| A | CN 116360472 A (IFLYTEK CO., LTD.) 30 June 2023 (2023-06-30)<br>entire document | 1-17 |
| A | CN 113524166 A (TENCENT TECHNOLOGY (SHENZHEN) CO., LTD.) 22 October 2021 (2021-10-22)<br>entire document | 1-17 |
| A | CN 114186662 A (INVENTEC TECHNOLOGY CO., LTD. et al.) 15 March 2022 (2022-03-15)<br>entire document | 1-17 |

| ✓ | Further documents are listed in the continuation of Box C. | ✓ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 September 2024** | **09 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/100652**

**C.    DOCUMENTS CONSIDERED TO BE RELEVANT**

| Category* | Citation of document, with indication, where appropriate, of the relevant passages | Relevant to claim No. |
|---|---|---|
| A | CN 112596534 A (HANGZHOU WEIMING XINKE TECHNOLOGY CO., LTD. et al.) 02 April 2021 (2021-04-02)<br>entire document | 1-17 |
| A | US 2022057800 A1 (BOSTON DYNAMICS INC.) 24 February 2022 (2022-02-24)<br>entire document | 1-17 |
| A | WO 2023005068 A1 (UBTECH ROBOTICS CORP., LTD.) 02 February 2023 (2023-02-02)<br>entire document | 1-17 |

Form PCT/ISA/210 (second sheet) (July 2022)

## INTERNATIONAL SEARCH REPORT
### Information on patent family members

International application No.

**PCT/CN2024/100652**

| Patent document cited in search report | | | Publication date (day/month/year) | Patent family member(s) | | | Publication date (day/month/year) |
|---|---|---|---|---|---|---|---|
| CN | 116945175 | A | 27 October 2023 | None | | | |
| CN | 113515135 | A | 19 October 2021 | JP | 2022101597 | A | 06 July 2022 |
| | | | | US | 2022324109 | A1 | 13 October 2022 |
| CN | 116360472 | A | 30 June 2023 | None | | | |
| CN | 113524166 | A | 22 October 2021 | HK | 40055207 | A0 | 11 March 2022 |
| | | | | HK | 40055207 | A1 | 30 December 2022 |
| CN | 114186662 | A | 15 March 2022 | US | 2022083012 | A1 | 17 March 2022 |
| | | | | US | 11474484 | B2 | 18 October 2022 |
| CN | 112596534 | A | 02 April 2021 | None | | | |
| US | 2022057800 | A1 | 24 February 2022 | US | 11726481 | B2 | 15 August 2023 |
| | | | | US | 10528051 | B1 | 07 January 2020 |
| | | | | US | 2020241534 | A1 | 30 July 2020 |
| | | | | US | 11188081 | B2 | 30 November 2021 |
| | | | | US | 2023333559 | A1 | 19 October 2023 |
| | | | | US | 9594377 | B1 | 14 March 2017 |
| WO | 2023005068 | A1 | 02 February 2023 | US | 2023133934 | A1 | 04 May 2023 |
| | | | | CN | 113524190 | A | 22 October 2021 |

Form PCT/ISA/210 (patent family annex) (July 2022)

**EP 4 678 350 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310960451